# EUROPEAN PATENT SPECIFICATION

(11) **EP 4 537 722 B1**
(45) Date of publication and mention of the grant of the patent: **22.04.2026**
(21) Application number: 24206311.3
(22) Date of filing: 14.10.2024
(51) Int. Cl.: A47J 37/06

(54) **HIGH ENERGY EFFICIENT AIR FRYER**
HOCHENERGETISCHES EFFIZIENTES LUFTFRITTGERÄT
FRITEUSE À AIR À HAUTE EFFICACITÉ ÉNERGÉTIQUE

(30) Priority: 14.10.2023 CN 202322770307 U; 24.09.2024 CN 202422333513 U
(43) Date of publication of application: 16.04.2025
(73) Proprietor: Ningbo Careline Electric Appliance Co., Ltd., Ningbo, Zhejiang 315000 (CN)
(72) Inventor: ZHANG, Yichi, Ningbo, Zhejiang, 315000 (CN); PAN, Huayuan, Ningbo, Zhejiang, 315000 (CN); HE, Sheng, Ningbo, Zhejiang (CN); ZHU, Mingjia, Ningbo, Zhejiang (CN)
(74) Representative: Meyer-Dulheuer MD Legal Patentanwälte PartG mbB

(56) References cited:
- CN-U- 217 937 954
- CN-U- 219 516 015

## Description

### CROSS-REFERENCE TO RELATED APPLICATIONS

The present disclosure claims the priority of Chinese patent application No. 2023108803892, filed to the CNIPA on July 18, 2023 and entitled "HIGH ENERGY EFFICIENT AIR FRYER", and Chinese patent application No. 2024223335136, filed to the CNIPA on September 24, 2024 and entitled "HIGH THERMAL EFFICIENCY UP-DOWN DUAL-CORE AIR FRYER'.

### TECHNICAL FIELD

The present disclosure relates to the technical field of kitchen appliances and cooking appliances, particularly to an air fryer, and more particularly to an high energy efficient air fryer.

### BACKGROUND

With the improvement of people's living standards, many people pay more and more attention to healthy diet, and air fryers that use air instead of hot oil for cooking are more and more popular among people. To meet the needs of multiple users, a type of dual-kettle air fryer has appeared on the market. This kind of air fryer can cook a large amount of food at the same time. However, due to the limitation of the total power and the large amount of food, the heating speed of the air fryer is slow. At the same time, since the two cooking chambers of the air fryer are not connected, the hot air generated by the heating element in one cooking chamber circulates and is directly discharged into the atmosphere after use, resulting in a serious waste of heat energy and a low overall thermal efficiency of the air fryer, which slows down the cooking process. In addition, the two frying baskets of this type of dual-kettle air fryer are mostly set side by side, which makes the volume of the air fryer larger and occupies a large desktop area, resulting in a high space occupancy rate and poor user experience. CN 219 516 015 U relates to an air fryer, including a body, wherein the body is internally provided with a first cooking chamber and a second cooking chamber, wherein the first cooking chamber is equipped with a first circulation fan and the second cooking chamber is equipped with a second circulation fan. CN 217 937 954 U relates to an air fryer with the feature of a cooking chamber being provided with an air outlet corresponding to the circulation fan and the air outlet being connected to a second cooking chamber through a pipeline.

### SUMMARY

In order to solve the above at least one technical problem, the present invention discloses the following technical solutions.

A high energy efficient air fryer, including a body, wherein the body is internally provided with a first cooking chamber and a second cooking chamber, characterized in that the first cooking chamber is equipped with a first circulation fan, and the first cooking chamber is provided with a first air outlet corresponding to the first circulation fan, the first air outlet is connected to the second cooking chamber through a first pipeline; the second cooking chamber is equipped with a second circulation fan, and the second cooking chamber is provided with a second air outlet corresponding to the second circulation fan, the second air outlet is connected to the first cooking chamber through a second pipeline.

In one or more embodiments, the first cooking chamber is equipped with a first heating tube, the second cooking chamber is equipped with a second heating tube, and the rated power of the first heating tube is greater than or less than the rated power of the second heating tube.

In one or more embodiments, the body is provided with a motor, and the motor is drive-connected to the first circulation fan and the second circulation fan.

Further, wherein the motor is located between the first cooking chamber and the second cooking chamber, the motor has a rotating shaft on both sides relative to the first cooking chamber and the second cooking chamber, the rotating shafts respectively extend into the first cooking chamber and the second cooking chamber to connect with the first circulation fan and the second circulation fan.

In one or more embodiments, the first cooking chamber includes a first air duct plate forming part of the inner wall of the first cooking chamber, the middle of the first air duct plate is a first concave cavity with an opening facing the middle of the first cooking chamber, the first circulation fan is located in the first concave cavity, and the first air outlet is located on the side wall corresponding to the first circulation fan of the first concave cavity; the second cooking chamber includes a second air duct plate forming part of the inner wall of the second cooking chamber, The middle of second air duct plate is a second concave cavity with an opening facing the middle of the second cooking chamber, the second circulation fan is located in the second concave cavity, and the second air outlet is located on the side wall corresponding to the second circulation fan of the second concave cavity.

Further, wherein the mouth edge of the first concave cavity is bent outward to form a first extension part, and the first extension part is provided with a first air inlet which communicating with the first cooking chamber, the first air inlet is connected to the second air outlet through the second pipeline; the mouth edge of the second concave cavity is bent outward to form a second extension part, and the second extension part is provided with a second air inlet which communicating with the second cooking chamber, the second air inlet is connected to the first air outlet through the first pipeline. Further, wherein the first air inlet and the first air outlet are respectively located on opposite sides of the first air duct plate, and the second air inlet and the second air outlet are respectively located on the opposite sides of the second air duct plate.

Further, wherein the first cooking chamber and the second cooking chamber are arranged vertically spaced apart, the first air inlet is located directly above the second air outlet, and the first air outlet is located directly above the second air inlet; or,
the first cooking chamber and the second cooking chamber are arranged at intervals on both sides, the first air inlet is located directly to the left of the second air outlet, and the first air outlet is located directly to the left of the second air inlet.

In one or more embodiments, the first cooking chamber and/or the second cooking chamber is provided with a ventilation hole communicating with the external atmosphere.

Further, the body includes a shell, the first cooking chamber and the second cooking chamber are located inside the shell, a heat dissipation chamber is formed between the outer walls of the first cooking chamber and the second cooking chamber and the shell, the shell is provided with an air outlet component communicating the heat dissipation chamber with the atmosphere, the air outlet component includes a heat dissipation fan. In one or more embodiments, the internal size of the first pipeline connected to the first air outlet is larger than the internal size connected to the second cooking chamber; and/or
the internal size of the second pipeline connected to the second air outlet is larger than the internal size connected to the first cooking chamber.

In one or more embodiments, the internal size of the first pipeline gradually increases from the end connected to the first air outlet to the end connected to the second cooking chamber; and/or
the internal size of the second pipeline gradually increases from the end connected to the second air outlet to the end connected to the first cooking chamber.

In one or more embodiments, the area of the first pipeline corresponding to the first circulation fan and the first air outlet is an arc-shaped guide flow part facing the second cooking chamber; and/or
the area of the second pipeline corresponding to the second circulation fan and the second air outlet is an arc-shaped guide flow part facing the first cooking chamber.

In one or more embodiments, the first cooking chamber is provided with a first air inlet corresponding to the second pipeline, the mouth edge of the first air inlet is provided with a first annular flange, the second pipeline is sleeved over the first annular flange; and/or
the second cooking chamber is provided with a second air inlet corresponding to the first pipeline, the mouth edge of the second air inlet is provided with a second annular flange, the first pipeline is sleeved over the second annular flange.

In one or more embodiments, the bottom of the first cooking chamber is provided with a first recessed cavity that is concave downward, the first circulation fan is located inside the first recessed cavity, the bottom wall of the first cooking chamber is provided with an air return port corresponding to the first circulation fan and connected to the first recessed cavity, the outer side of the air return port is equipped with an air outlet; the first cooking chamber is equipped with a first frying basket with an open top, the first frying basket is adapted to form a hot air gap with the inner wall of the first cooking chamber, the bottom of the first frying basket is provided with a hot air outlet corresponding to at least part of the air return port, the circulating airflow generated by the first circulation fan is suitable to enter the hot air gap through the air outlet, then flow in the direction of the open top of the first frying basket, enter the first frying basket from the open top, and return to the first recessed cavity through the hot air outlet and the air return port, the airflow circulation path of the first circulation fan is equipped with a first heating component.

In one or more embodiments, the periphery of the hot air outlet is provided with an upwardly folded flange, there is a first frying plate with a through-hole suspended inside the first frying basket, the middle part of the first frying plate is provided with a shielding part which corresponds to the hot air outlet, the shielding part is suitable for covering the hot air outlet.

In one or more embodiments, The high energy efficient air fryer according to claim 10, wherein the side wall of the first frying basket (20, 20A) is provided with multiple air inlet holes (23) that communicate with the hot air gap (19) and the inner cavity of the first frying basket (20, 20A), the air inlet holes (23) are vertically extending strip-shaped holes, the circulating airflow generated by the first circulation fan (1310, 131, 131A) enters the hot air gap (19) and at least partially passes through the air inlet holes (23) into the first frying basket (20, 20A).

In one or more embodiments, the bottom of the first cooking chamber is provided with a first recessed cavity that is concave downward, the first circulation fan is located inside the first recessed cavity, the bottom wall of the first cooking chamber is provided with an air return port corresponding to the first circulation fan and connected to the first recessed cavity, the outer side of the air return port is equipped with an air outlet; the first cooking chamber is equipped with a first frying basket with an open top, the first frying basket includes an outer pot and an inner pot suspended within the outer pot, a first hot air gap communicates with the inner cavity of the inner pot is formed between the side wall of the inner pot and the side wall of the outer pot, a second hot air gap is formed between the bottom wall of the inner pot and the bottom wall of the outer pot, at the bottom of the outer pot is equipped with a hot air outlet that communicates with the second hot air gap and corresponds to at least part of the air return ports, on the outside of the hot air outlet is equipped with a hot air inlet that communicates with the first hot air gap and corresponds at least partially to the air outlets, the bottom of the inner pot is provided with ventilation holes, the circulating airflow generated by the first circulation fan is suitable to enter the first hot air gap through the air outlets and the hot air inlet and flow in the direction of the open top of the inner pot, then enters the inner pot from the open top, and returns to the first recessed cavity through the ventilation holes, the hot air outlet, and the air return ports, the airflow circulation path of the first circulation fan is equipped with a first heating component.

In one or more embodiments, the periphery of the hot air outlet is provided with an upwardly folded flange, on the bottom wall of the inner pot is provided with a shielding part which corresponds to the hot air outlet and has a sealed structure, the shielding part is suitable for covering the hot air outlet.

In one or more embodiments, the side wall of the inner pot is provided with multiple air inlet holes that communicate with the first hot air gap and the inner cavity of the inner pot, the air inlet holes are vertically extending strip-shaped holes, the circulating airflow generated by the first circulation fan enters the first hot air gap and at least partially passes through the air inlet holes into the inner pot.

### BRIEF DESCRIPTION OF THE DRAWINGS

To illustrate the technical solutions in the specific embodiments of the present disclosure or the prior art more clearly, the accompanying drawings required for use in the specific embodiments or the prior art will be briefly described below, and obviously, the accompanying drawings in the following description are some embodiments of the present disclosure, and other drawings can be obtained from these drawings for those of ordinary skill in the art without paying inventive steps.
FIG. 1 is a first perspective overall cross-sectional view of a first embodiment of the high energy efficient air fryer of the present disclosure.
FIG. 2 is a second perspective overall cross-sectional view of the first embodiment of the high energy efficient air fryer of the present disclosure.
FIG. 3 is a schematic overall structure diagram of a second embodiment of the high energy efficient air fryer of the present disclosure.
FIG. 4 is a cross-sectional view of the second embodiment of the high energy efficient air fryer of the present disclosure.
FIG. 5 is a partial structural diagram of the second embodiment of the high energy efficient air fryer of the present disclosure.
FIG. 6 is another partial structural diagram of the second embodiment of the high energy efficient air fryer of the present disclosure.
FIG. 7 is a cross-sectional view of a third embodiment of the high energy efficient air fryer of the present disclosure.
FIG. 8 is a schematic diagram of the first frying basket of the third embodiment of the high energy efficient air fryer of the present disclosure.
FIG. 9 is a schematic exploded view of the structure of the first frying basket of the third embodiment of the high energy efficient air fryer of the present disclosure.

Signs: 100 (10, 10A)-body; 110 (11, 11A)-first cooking chamber; 1110 (111)-first air outlet; 1120 (112)-first air inlet; 113-first annular flange; 114 (114A)-air return port; 115 (115A)-air outlet; 120 (12, 12A)-second cooking chamber; 1210 (121)-second air outlet; 1220 (122)-second air inlet; 123-second annular flange; 130 (13, 13A)-first thermal air circulation system; 1310 (131, 131A)-first circulation fan; 1320 (132, 132A)-first heating component; 1321-first heating tube; 140 (14, 14A)-second thermal air circulation system; 1410 (141, 141A)-second circulation fan; 1420 (142, 142A)-second heating component; 1421-second heating tube; 150 (15)-first pipeline; 160 (16)-second pipeline; 170 (17, 17A)-first air duct plate; 1710 (171, 171A)-first concave cavity; 1720 (172)-first extension part; 180 (18)-second air duct plate; 1810 (181)-second concave cavity; 1820 (182)-second extension part; 190-shell; 19-thermal air gap; 20 (20A)-first frying basket; 21 (21A)-thermal air outlet; 22 (22A)-flange; 23-air inlet; 24A-outer pot; 25A-Inner pot; 251A-ventilation hole; 252A-shielding part; 253A-air inlet; 26A-first thermal air gap; 27A-second thermal air gap; 28A-thermal air inlet; 30-first frying plate; 31-shielding part; 400-motor; 500-ventilation hole; 600-heat dissipation chamber; 700-air outlet assembly; 800-heat dissipation fan.

### DETAILED DESCRIPTION

The present disclosure provides a high energy efficient air fryer to solve the technical problems of low thermal efficiency, slow cooking speed, high space occupancy rate, and poor user experience of existing air fryers.

In order to solve the above technical problems, the present disclosure provides an high energy efficient air fryer, including a body, within which there are a first cooking chamber and a second cooking chamber, the first cooking chamber is equipped with a first circulation fan, and the first cooking chamber has a first air outlet corresponding to the first circulation fan, the first air outlet is connected to the second cooking chamber through a first pipeline; the second cooking chamber is equipped with a second circulation fan, and the second cooking chamber has a second air outlet corresponding to the second circulation fan, the second air outlet is connected to the first cooking chamber through a second pipeline. By connecting the first air outlet of the first cooking chamber to the second cooking chamber through the first pipeline, it is possible to guide the hot air discharged from the first cooking chamber into the second cooking chamber for reuse; at the same time, by connecting the second air outlet of the second cooking chamber to the first cooking chamber through the second pipeline, it is possible to guide the hot air discharged from the second cooking chamber into the first cooking chamber for reuse, compared with traditional multi-chamber air fryers that directly discharge the hot air from the cooking chamber into the atmosphere, wasting the heat, this document fully utilizes the heat in the hot air, effectively improving the thermal efficiency of the product.

In an optional embodiment, the first cooking chamber is equipped with a first heating tube, and the second cooking chamber is equipped with a second heating tube. The rated power of the first heating tube is greater than or less than the rated power of the second heating tube. By setting different power heating tubes in the first and second cooking chambers, it is possible to achieve different cooking temperature ranges in the first and second cooking chambers, thereby enabling the simultaneous cooking of different types of food.

In an optional embodiment, the body is equipped with a motor, which is drive-connected to the first and second circulation fans. By using one motor to drive both the first and second circulation fans, it is possible to reduce production costs.

In an optional embodiment, the motor is located between the first and second cooking chambers, and the motor has a rotating shaft on both sides relative to the first and second cooking chambers, the rotating shafts respectively extend into the first and second cooking chambers to connect with the first and second circulation fans. By designing the motor with rotating shafts on both sides and directly connecting the rotating shafts to the first and second circulation fans, it is possible to further simplify the structure and reduce costs.

In an optional embodiment, the first cooking chamber includes a first air duct plate forming part of the inner wall of the first cooking chamber, The middle of the first air duct plate is a first concave cavity with an opening facing the middle of the first cooking chamber, the first circulation fan is located in the first concave cavity, and the first air outlet is located on the side wall corresponding to the first circulation fan of the first concave cavity; the second cooking chamber includes a second air duct plate forming part of the inner wall of the second cooking chamber, the middle of second air duct plate is a second concave cavity with an opening facing the middle of the second cooking chamber, the second circulation fan is located in the second concave cavity, and the second air outlet is located on the side wall corresponding to the second circulation fan of the second concave cavity. By setting the first and second cavities in the first and second air duct plates, it is possible to better guide the hot air to the middle of the first and second cooking chambers, thereby achieving improved frying and baking efficiency of the food; at the same time, by setting the first air outlet on the side wall opposite the first circulation fan of the first concave cavity, it is possible to ensure that the airflow blown out by the first circulation fan can smoothly enter the first air outlet under the action of inertia and then flow along the first pipeline into the second cooking chamber; similarly, by setting the second air outlet on the side wall opposite the second circulation fan of the second concave cavity, it is possible to ensure that the airflow blown out by the second circulation fan can smoothly enter the second air outlet under the action of inertia and then flow along the second pipeline into the first cooking chamber, such a design ensures the efficient circulation of hot air in the first and second cooking chambers, thereby improving heating efficiency.

**In** an optional embodiment, the mouth edge of the first concave cavity is bent outward to form a first extension part, and the first extension part is provided with a first air inlet which communicating with the first cooking chamber, the first air inlet is connected to the second air outlet through the second pipeline; the mouth edge of the second concave cavity is bent outward to form a second extension part, and the second extension part is provided with a second air inlet which communicating with the second cooking chamber, the second air inlet is connected to the first air outlet through the first pipeline. By setting the first air inlet on the first extension part, it is possible to avoid the situation where the airflow blown out by the first circulation fan directly flows through the first air inlet, causing excessive pressure at the first air inlet and preventing the hot air in the second pipeline from entering the first cooking chamber; it also avoids the negative pressure formed in the first extension part area due to the entrainment effect when the airflow blown out by the first circulation fan flows along the inner wall of the first concave cavity to the middle of the first cooking chamber, thus allowing the hot air in the second pipeline to enter the first cooking chamber smoothly; similarly, setting the second air inlet on the second extension part also facilitates the entry of hot air from the second pipeline into the second cooking chamber, ensuring efficient circulation of hot air in the first and second cooking chambers and thus improving heating efficiency.

In an optional embodiment, the first air inlet and the first air outlet are respectively located on opposite sides of the first air duct plate, and the second air inlet and the second air outlet are respectively located on opposite sides of the second air duct plate. This not only avoids the mutual interference between the first air inlet and the first air outlet, the second air inlet and the second air outlet, but also achieves efficient circulation of hot air in the first and second cooking chambers, thereby improving heating efficiency.

In an optional embodiment, the first cooking chamber and the second cooking chamber are arranged vertically spaced apart, the first air inlet is located directly above the second air outlet, and the first air outlet is located directly above the second air inlet; or, the first cooking chamber and the second cooking chamber are arranged at intervals on both sides, the first air inlet is located directly to the left of the second air outlet, and the first air outlet is located directly to the left of the second air inlet. By designing the first air outlet and the second air inlet as vertically or horizontally opposite structures, it is possible to simplify the product structure while reducing the length of the first pipeline, which is beneficial for the flow of hot air and reducing heat loss. Similarly, by designing the second air outlet and the first air inlet as vertically or horizontally opposite structures, it is also possible to simplify the product structure while reducing the length of the second pipeline, which is beneficial for the flow of hot air and reducing heat loss. In an optional embodiment, the first cooking chamber and/or the second cooking chamber is equipped with a ventilation hole communicating with the external atmosphere. By communicating the ventilation hole with the external atmosphere, it is possible to discharge some of the hot air to avoid excessive pressure in the first and second cooking chambers, which could affect the efficiency of the internal airflow circulation.

In an optional embodiment, the body includes an shell, and the first and second cooking chambers are located inside the shell, a heat dissipation chamber is formed between the outer walls of the first cooking chamber and the second cooking chamber and the shell, the shell is provided with an air outlet component communicating the heat dissipation chamber with the atmosphere, the air outlet component includes a heat dissipation fan. By using the heat dissipation fan to drive the flow of cooling air in the heat dissipation chamber, it is possible to carry away the heat from the electrical components and the shell, effectively improving the practicality of the product.

In an optional embodiment, the internal size of the first pipeline connected to the first air outlet is larger than the internal size connected to the second cooking chamber; and/or the internal size of the second pipeline connected to the second air outlet is larger than the internal size connected to the first cooking chamber. By setting the internal size of the first pipeline at the end connected to the first air outlet to be larger than the internal size at the end connected to the second cooking chamber, and/or setting the internal size of the second pipeline at the end connected to the second air outlet to be larger than the internal size at the end connected to the first cooking chamber, it is possible to increase the air intake and airspeed of the first pipeline and the second pipeline, allowing the circulating hot air in the first and second cooking chambers to enter the first pipeline and the second pipeline more quickly and efficiently, thereby effectively improving the heat circulation speed between the first and second cooking chambers and further improving cooking efficiency.

In an optional embodiment, the internal size of the first pipeline gradually increases from the end connected to the first air outlet to the end connected to the second cooking chamber, and/or the internal size of the second pipeline gradually increases from the end connected to the second air outlet to the end connected to the first cooking chamber. Such a setting not only allows for smoother airflow in the first pipeline and the second pipeline, effectively improving the heat circulation speed between the first and second cooking chambers and further improving cooking efficiency, but also allows for the diffusion of the circulating hot air in the first pipeline and the second pipeline into the first cooking chamber and the second cooking chamber, avoiding the situation where the circulating hot air is regionally concentrated, leading to differences in cooking areas, and effectively improving the cooking effect of the air fryer.

In an optional embodiment, the area of the first pipeline corresponding to the first circulation fan and the first air outlet is an arc-shaped guide flow part facing the second cooking chamber; and/or the area of the second pipeline corresponding to the second circulation fan and the second air outlet is an arc-shaped guide flow part facing the first cooking chamber. By setting the area of the first pipeline corresponding to the first circulation fan and the first air outlet as an arc-shaped guide flow part facing the second cooking chamber, and/or setting the area of the second pipeline corresponding to the second circulation fan and the second air outlet as an arc-shaped guide flow part facing the first cooking chamber, it is possible to better guide the circulating hot air in the first and second cooking chambers into the first pipeline and the second pipeline, thereby effectively improving the heat circulation speed between the first and second cooking chambers and further improving cooking efficiency.

In an optional embodiment, the first cooking chamber is provided with a first air inlet corresponding to the second pipeline, the mouth edge of the first air inlet is provided with a first annular flange, the second pipeline is sleeved over the first annular flange; and/or the second cooking chamber is provided with a second air inlet corresponding to the first pipeline, the mouth edge of the second air inlet is provided with a second annular flange, the first pipeline is sleeved over the second annular flange. By sleeving the first pipeline and/or the second pipeline over the first annular flange and/or the second annular flange, it is possible to simplify the structure of the air fryer, reduce production and user costs, This not only simplifies the structure of the air fryer, reduces production and user costs, but also facilitates the installation of the first pipeline and/or the second pipeline; additionally, the first annular flange and/or the second annular flange are suitable for positioning and/or limiting the first pipeline and/or the second pipeline, by positioning and/or limiting the first pipeline and/or the second pipeline with the first annular flange and/or the second annular flange, it is possible to effectively reduce the installation difficulty of the first pipeline and/or the second pipeline; moreover, it avoids the misalignment of the first pipeline and/or the second pipeline with the first air inlet and/or the second air inlet during use, which could cause the circulating hot air to fail to enter the first cooking chamber and/or the second cooking chamber normally, or to leak outside the first cooking chamber and/or the second cooking chamber, potentially causing damage to the electrical components, this effectively enhances the performance stability and safety of the air fryer.

In an optional embodiment, the bottom of the first cooking chamber is provided with a first recessed cavity that is concave downward, the first circulation fan is located inside the first recessed cavity, the bottom wall of the first cooking chamber is provided with an air return port corresponding to the first circulation fan and connected to the first recessed cavity, the outer side of the air return port is equipped with an air outlet; the first cooking chamber is equipped with a first frying basket with an open top, the first frying basket is adapted to form a hot air gap with the inner wall of the first cooking chamber, the bottom of the first frying basket is provided with a hot air outlet corresponding to at least part of the air return port, the circulating airflow generated by the first circulation fan is suitable to enter the hot air gap through the air outlet, then flow in the direction of the open top of the first frying basket, enter the first frying basket from the open top, and return to the first recessed cavity through the hot air outlet and the air return port, the airflow circulation path of the first circulation fan is equipped with a first heating component. By setting the first circulation fan at the bottom of the first cooking chamber and guiding the circulating airflow generated by the first circulation fan to the top of the first cooking chamber after being heated by the first heating component, and entering the first frying basket from the open top of the first frying basket, it is possible to reduce problems such as food scorching caused by the direct blowing of circulating hot air into the first frying basket, effectively improving the cooking effect.

In an optional embodiment, the periphery of the hot air outlet is provided with an upwardly folded flange, there is a first frying plate with a through-hole suspended inside the first frying basket, the middle part of the first frying plate is provided with a shielding part which corresponds to the hot air outlet, the shielding part is suitable for covering the hot air outlet. By setting the upwardly folded flange around the periphery of the hot air outlet, it is possible to block the oil and/or water produced by the cooking food inside the first frying basket, so as to avoid the oil and/or water flowing out through the hot air outlet and contaminating the external environment, and/or flowing into the first recessed cavity, thereby causing difficulties in cleaning and other problems, effectively improving the user experience; at the same time, by suspending the first frying plate with through holes inside the first frying basket, not only can the food be supported to facilitate the circulating hot airflow generated by the first circulation fan and heated by the first heating component to better heat the upper and lower surfaces of the food, effectively improving the cooking efficiency and cooking effect, but also sufficient space can be reserved below the first frying plate for the circulating hot airflow to pass through and flow out from the hot air outlet, effectively improving the hot airflow circulation efficiency inside the first cooking chamber, and thus improving the cooking efficiency. In addition, by setting the shielding part on the first frying plate to cover the hot air outlet, it is also possible to block the oil and/or water produced when cooking food on the first frying plate, so as to avoid the oil and/or water directly flowing out of the first frying basket through the hot air outlet, thereby contaminating the external environment and/or flowing into the first recessed cavity and causing difficulties in cleaning and other problems, effectively improving the user experience. In an optional embodiment, the side wall of the first frying basket is provided with multiple air inlet holes that communicate with the hot air gap and the inner cavity of the first frying basket, the air inlet holes are vertically extending strip-shaped holes, the circulating airflow generated by the first circulation fan enters the hot air gap and at least partially passes through the air inlet holes into the first frying basket. By setting the air inlet holes on the side wall of the first frying basket, it is possible to introduce the circulating hot airflow in the hot air gap into the first frying basket from multiple directions to heat the food inside the first frying basket, which can not only effectively improve the cooking effect but also effectively improve the heat flow circulation efficiency inside the first cooking chamber, thereby improving the cooking efficiency. In an optional embodiment, the bottom of the first cooking chamber is provided with a first recessed cavity that is concave downward, the first circulation fan is located inside the first recessed cavity, the bottom wall of the first cooking chamber is provided with an air return port corresponding to the first circulation fan and connected to the first recessed cavity, the outer side of the air return port is equipped with an air outlet; the first cooking chamber is equipped with a first frying basket with an open top, the first frying basket includes an outer pot and an inner pot suspended within the outer pot, a first hot air gap communicates with the inner cavity of the inner pot is formed between the side wall of the inner pot and the side wall of the outer pot, a second hot air gap is formed between the bottom wall of the inner pot and the bottom wall of the outer pot, at the bottom of the outer pot is equipped with a hot air outlet that communicates with the second hot air gap and corresponds to at least part of the air return ports, on the outside of the hot air outlet is equipped with a hot air inlet that communicates with the first hot air gap and corresponds at least partially to the air outlets, the bottom of the inner pot is provided with ventilation holes, the circulating airflow generated by the first circulation fan is suitable to enter the first hot air gap through the air outlets and the hot air inlet and flow in the direction of the open top of the inner pot, then enters the inner pot from the open top, and returns to the first recessed cavity through the ventilation holes, the hot air outlet, and the air return ports, the airflow circulation path of the first circulation fan is equipped with a first heating component. By setting the first circulation fan at the bottom of the first cooking chamber and guiding the circulating hot airflow generated by the first circulation fan and the first heating component to the top of the inner pot through the first hot air gap, entering the inner pot from the open top of the inner pot, and returning to the first recessed cavity from the ventilation holes at the bottom of the inner pot and the second hot air gap through the hot air outlet and the air return port, it is possible to reduce problems such as food scorching caused by the direct blowing of circulating hot airflow into the inner pot. It can also heat the upper and lower surfaces of the food inside the inner pot, effectively improving cooking efficiency and cooking effect; at the same time, by setting the first frying basket as a double-layer structure of inner and outer layers and arranging the first hot air gap that communicates with the first recessed cavity between the inner pot and the outer pot, it is possible to introduce the circulating hot airflow from the top periphery of the inner pot into the inner pot, thereby heating the food inside the inner pot and effectively improving the cooking effect.

In an optional embodiment, the periphery of the hot air outlet is provided with an upwardly folded flange, on the bottom wall of the inner pot is provided with a shielding part which corresponds to the hot air outlet and has a sealed structure, the shielding part is suitable for covering the hot air outlet. By setting the upwardly folded flange around the periphery of the hot air outlet, it is possible to block the oil and/or water flowing out of the inner pot through the ventilation holes, so as to avoid the oil and/or water contaminating the external environment after flowing out through the hot air outlet, and/or flowing into the first recessed cavity, thereby causing difficulties in cleaning and other problems, effectively improving the user experience; at the same time, by setting the shielding part on the bottom wall of the inner pot to cover the hot air outlet and having a closed structure, it is possible to block the oil and/or water produced when cooking food inside the inner pot, so as to avoid the oil and/or water directly flowing out of the outer pot through the hot air outlet, thereby contaminating the external environment and/or flowing into the first recessed cavity and causing difficulties in cleaning and other problems, effectively improving the user experience.

In an optional embodiment, the side wall of the inner pot is provided with multiple air inlet holes that communicate with the first hot air gap and the inner cavity of the inner pot, the air inlet holes are vertically extending strip-shaped holes, the circulating airflow generated by the first circulation fan enters the first hot air gap and at least partially passes through the air inlet holes into the inner pot. By setting the air inlet holes on the side wall of the inner pot, it is possible to introduce the circulating hot airflow in the first hot air gap into the inner pot from multiple directions to heat the food inside the inner pot, which can not only effectively improve the cooking effect but also effectively improve the heat flow circulation efficiency inside the first frying basket, thereby improving the cooking efficiency.

Compared with the prior art, the beneficial effects of the present disclosure are as follows:
in the present disclosure, the hot airflow discharged from the first cooking chamber to be directed into the second cooking chamber through the first pipeline for reuse by connecting the first air outlet on the first cooking chamber to the second cooking chamber through the first pipeline; similarly, it allows the hot airflow discharged from the second cooking chamber to be directed into the first cooking chamber for reuse by connecting the second air outlet on the second cooking chamber to the first cooking chamber through the second pipeline, this design fully utilizes the heat in the hot airflow, effectively improving the product's thermal efficiency.

In the present disclosure, by setting the internal size of the end of the first pipeline connected to the second cooking chamber larger than that of the end connected to the first air outlet, and/or setting the internal size of the end of the second pipeline connected to the first cooking chamber larger than that of the end connected to the second air outlet, the air intake and speed of the first and second pipelines can be increased, this allows the circulating hot airflow inside the first and second cooking chambers to enter the first and second pipelines more quickly and effectively, thereby improving the circulation speed of the hot airflow between the first and second cooking chambers and enhancing the cooking efficiency.

In order to make the objects, technical solutions and advantages of the embodiments of the present disclosure more clear, the technical solutions in the embodiments of the present disclosure will be clearly and completely described below in conjunction with the accompanying drawings in the embodiments of the present disclosure, and obviously, the described embodiments are a part of the embodiments of the present disclosure, rather than all of the embodiments. The components of the embodiments of the present disclosure generally described and illustrated in the accompanying drawings herein can be arranged and designed in a variety of different configurations.

Thus, the following detailed description of the embodiments of the present disclosure provided in the accompanying drawings is not intended to limit the scope of the present disclosure, but is merely representative of selected embodiments of the present disclosure. Based on the embodiments in the present disclosure, all other embodiments obtained by those of ordinary skill in the art without making inventive steps belong to the scope of protection of the present disclosure.

### Embodiment 1:

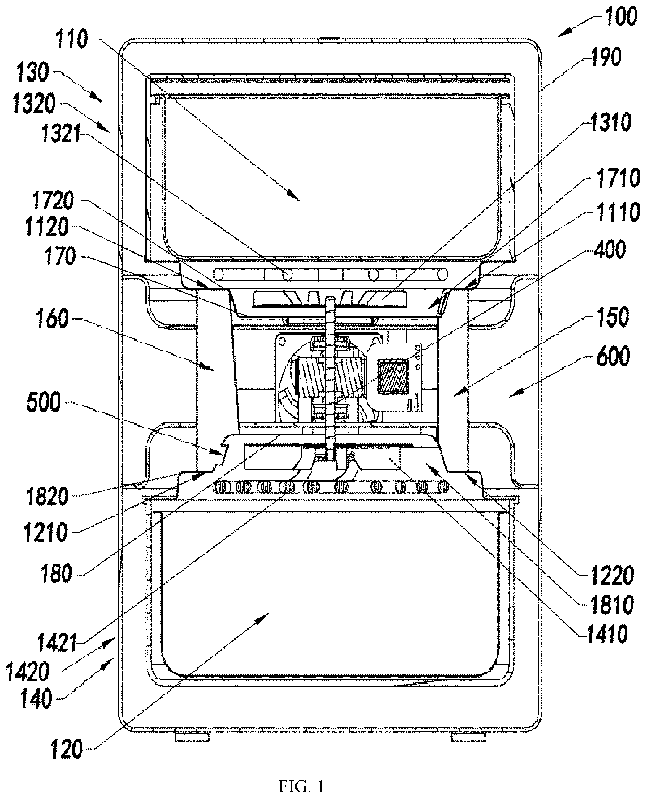

FIGS. 1 to 4 are schematic diagrams of a first embodiment of a high energy efficient air fryer according to the present disclosure. The air fryer includes a body 100, within which are located a first cooking chamber 110 and a second cooking chamber 120, the first cooking chamber 110 and the second cooking chamber 120 are equipped with a first hot air circulation system 130 and a second hot air circulation system 140, respectively, these systems are suitable for generating a circulating hot airflow to heat the food inside the first and second cooking chambers. By setting up the first and second hot air circulation systems within the respective chambers, it is possible to heat the food in both chambers simultaneously, effectively improving cooking efficiency.

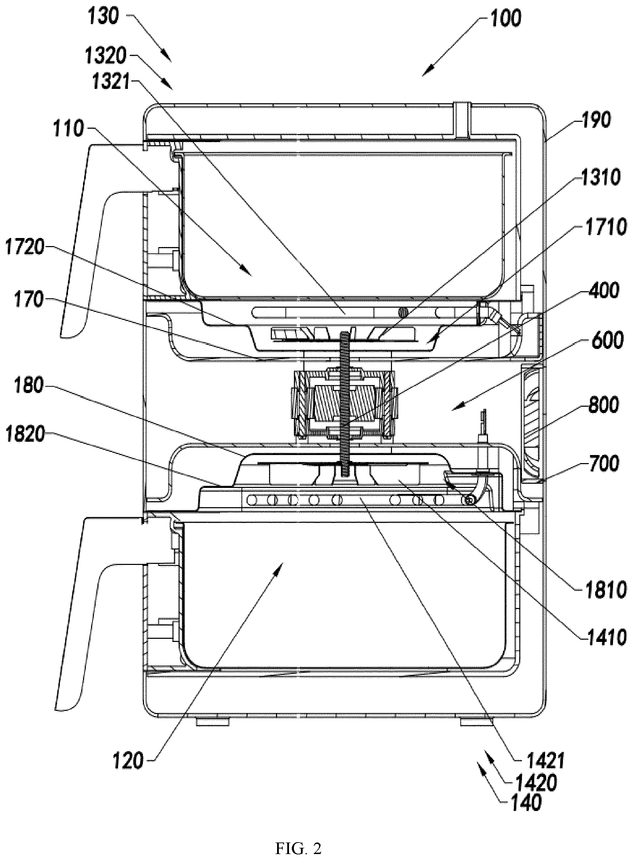

As shown in FIGS. 1 and 2, the first hot air circulation system 130 includes a first circulation fan 1310 and a first heating component 1320, while the second hot air circulation system 140 includes a second circulation fan 141 and a second heating component 1420. The first and second circulation fans are suitable for generating a circulating airflow, and the first and second heating components are suitable for heating the circulating airflow produced by the fans to form a circulating hot airflow, thereby heating the food inside the first and second cooking chambers.

As shown in FIGS. 1 and 2, the first heating component 1320 includes a first heating tube 1321 and fixing components for securing the first heating tube 1321, which is suitably positioned above the first circulation fan 1310. The second heating component 1420 includes a second heating tube 1421 and fixing components for securing the second heating tube 1421, which is suitably positioned below the second circulation fan 1410. When the first and second circulation fans are in operation, they typically blow air outward at the periphery and draw air inward in the middle. Therefore, by positioning the first heating tube 1321 and the second heating tube 1421 above and below the respective fans, not only can the circulating hot airflow be better generated, but the circulating hot airflow passing over the heating tubes can also be heated multiple times, effectively improving cooking efficiency.

As shown in FIGS. 1, the first cooking chamber 110 is equipped with a first air outlet 1110 corresponding to the first circulation fan 1310, and the second cooking chamber 120 is equipped with a second air outlet 1210 corresponding to the second circulation fan 1410. Inside the body 100, there are first and second ducts 150 and 160, respectively. The first duct 150 is suitable for connecting the first air outlet 1110 and the second cooking chamber 120, and the second duct 160 is suitable for connecting the second air outlet 1210 and the first cooking chamber 110. By connecting the first air outlet 1110 of the first cooking chamber 110 to the second cooking chamber 120 through the first duct 150, the hot airflow discharged from the first cooking chamber 110 can be directed into the second cooking chamber 120 for reuse. Similarly, by connecting the second air outlet 1210 of the second cooking chamber 120 to the first cooking chamber 110 through the second duct 160, the hot airflow discharged from the second cooking chamber 120 can be directed into the first cooking chamber 110 for reuse. Compared to traditional multi-chamber air fryers that directly discharge the hot airflow from the cooking chambers into the atmosphere through the air outlets, wasting the heat, this design makes full use of the heat in the hot airflow, effectively improving the thermal efficiency of the product.

As shown in FIGS. 1 and 2, in an optional embodiment, the rated power of the first heating tube 1321 is preferably greater than or less than that of the second heating tube 1421. By setting different power heating tubes in the first and second cooking chambers, it is possible to achieve different cooking temperature ranges in the chambers, thereby enabling the simultaneous cooking of different types of food.

As shown in FIGS. 1 and 2, in an optional embodiment, the body 100 is equipped with a motor 400, which is drivingly connected to both the first circulation fan 1310 and the second circulation fan 1410. By driving both fans with a single motor, production costs can be reduced.

As shown in FIG. 1 and 2, in an optional embodiment, the motor 400 is preferably positioned between the first and second cooking chambers 110 and 120. The motor 400 has rotating shafts on both sides facing the respective chambers, which are suitable for extending into the chambers to connect with the first and second circulation fans 1310 and 1410, respectively. By designing the motor 400 with rotating shafts on both sides and connecting them directly to the fans, the structure can be further simplified and costs reduced.

As shown in FIGS. 1 and 2, the first cooking chamber 110 includes a first air duct plate 170 forming part of its inner wall. The middle of the first air duct plate 170 has a first concave cavity 1710 opening towards the middle of the first cooking chamber 110. The first circulation fan 1310 is located within the first concave cavity 1710, and the first air outlet 1110 is located on the side wall opposite to the first circulation fan 1310 within the first concave cavity 1710. Similarly, the second cooking chamber 120 includes a second air duct plate 180 forming part of its inner wall, with a second concave cavity 1810 in the middle opening towards the middle of the second cooking chamber 120. The second circulation fan 1410 is located within the second concave cavity 1810, and the second air outlet 1210 is located on the side wall opposite to the second circulation fan 1410 within the second concave cavity 1810. The design of the first and second concave cavities helps to better guide the hot airflow towards the center of the first and second cooking chambers, thus improving the frying and baking efficiency of food. At the same time, by positioning the first air outlet 1110 on the side wall opposite to the first circulation fan 1310 within the first concave cavity 1710, the airflow ejected by the first circulation fan 1310 can smoothly enter the first air outlet 1110 under the action of inertia and then flow into the second cooking chamber 120 along the first duct 150. Similarly, by positioning the second air outlet 1210 on the side wall opposite to the second circulation fan 1410 within the second concave cavity 1810, the airflow ejected by the second circulation fan 1410 can smoothly enter the second air outlet 1210 under the action of inertia and then flow into the first cooking chamber 110 along the second duct 160. This design ensures efficient circulation of hot airflow within the first and second cooking chambers, thereby improving heating efficiency.

As shown in FIG. 1 and 2, in an optional embodiment, the rim of the first concave cavity 1710 is bent outward to form a first extension part 1720. The first extension part 1720 is equipped with a first air inlet 1120 that communicates with the first cooking chamber 110. The first air inlet 1120 is connected to the second air outlet 1210 through the second duct 160. Similarly, the rim of the second concave cavity 1810 is bent outward to form a second extension part 1820. The second extension part 1820 is equipped with a second air inlet 1220 that communicates with the second cooking chamber 120. The second air inlet 1220 is connected to the first air outlet 1110 through the first duct 150. By setting the first air inlet 1120 on the first extension part 1720, not only can it avoid the high pressure at the first air inlet 1120 caused by the airflow blown out by the first circulation fan 1310, which would prevent the hot airflow in the second duct 160 from entering the first cooking chamber 110, but it can also prevent the airflow blown out by the first circulation fan 1310 from flowing along the inner wall of the first concave cavity 1710 to the middle of the first cooking chamber 110. Due to the negative pressure formed in the area of the first extension part 1720 by the entrainment effect, the hot airflow in the second duct 160 can smoothly enter the first cooking chamber 110. Similarly, setting the second air inlet 1220 on the second extension part 1820 is also beneficial for the hot airflow in the first duct 150 to enter the second cooking chamber 120. This design ensures that the hot airflow in the first and second cooking chambers can circulate efficiently, thereby improving heating efficiency.

As shown in FIGS. 1 and 2, the first air inlet 1120 and the first air outlet 110 are located on opposite sides of the first air duct plate 170; the second air inlet 1220 and the second air outlet 1210 are located on opposite sides of the second air duct plate 180. This arrangement not only avoids mutual interference between the first air inlet 1120 and the first air outlet 1110, and between the second air inlet 1220 and the second air outlet 1210, but also realizes efficient circulation of hot airflow in the first and second cooking chambers, thereby improving heating efficiency.

As shown in FIG. 1 and 2, in an optional embodiment, the first cooking chamber 110 and the second cooking chamber 120 are preferably arranged vertically apart, with the first air inlet 1120 directly above the second air outlet 1210, and the first air outlet 1110 directly above the second air inlet 1220. In addition, in another optional embodiment, the first cooking chamber 110 and the second cooking chamber 120 can also be arranged horizontally apart, with the first air inlet 1120 directly to the left of the second air outlet 1210, and the first air outlet 1110 directly to the left of the second air inlet 1220. By designing the first air outlet 1110 and the second air inlet 1220 to be vertically or horizontally aligned, the product structure can be simplified, and the length of the first duct 150 can be reduced, which is beneficial for the flow of hot airflow and reduces heat loss; similarly, by designing the second air outlet 1210 and the first air inlet 1120 to be vertically or horizontally aligned, the product structure can be simplified, and the length of the second duct 160 can be reduced, which is beneficial for the flow of hot airflow and reduces heat loss.

As shown in FIG. 1 and 2, in an optional embodiment, the first cooking chamber 110 is equipped with a ventilation hole 500 that communicates with the external atmosphere. By ventilating through the ventilation hole 500, some of the hot airflow can be expelled to avoid excessive pressure in the first and second cooking chambers, which could affect the efficiency of internal airflow circulation. Furthermore, in another optional embodiment, the ventilation hole 500 can also be set on the second cooking chamber 120, or on both the first and second cooking chambers 110 and 120, which can also achieve the aforementioned effect.

As shown in FIG.1 and 2, the body 100 includes a shell 190, within which are located the first cooking chamber 110 and the second cooking chamber 120. The outer walls of the first and second cooking chambers 110 and 120 form a heat dissipation cavity 600 with the shell 190. The shell 190 is equipped with an air outlet component 700 that communicates the heat dissipation cavity 600 with the atmosphere, and the air outlet component 700 contains a heat dissipation fan 800. Through the operation of the heat dissipation fan 800, it is possible to drive the flow of cooling air within the heat dissipation cavity 600, thereby removing heat from electrical components and the shell 190, effectively enhancing the practicality of the product.

### Embodiment 2:

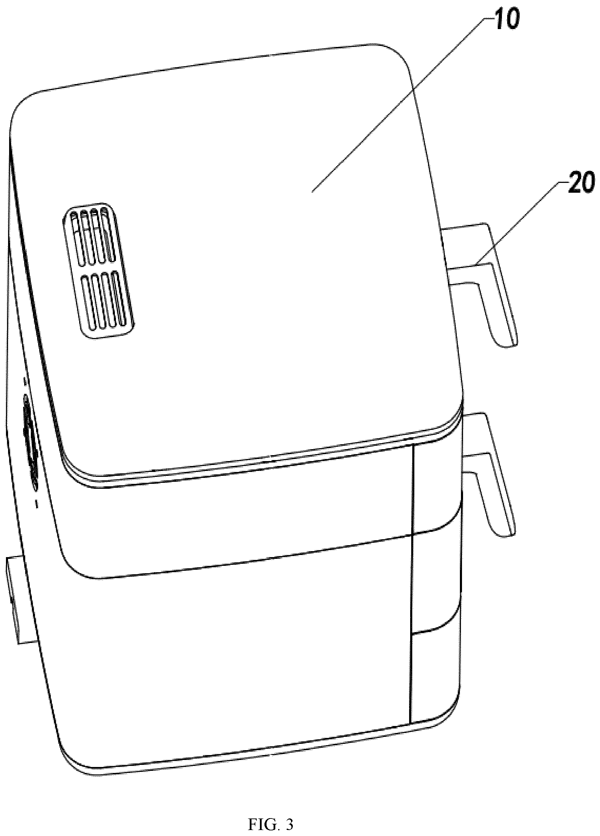

FIGS. 3 to 6 are schematic diagrams of a second embodiment of a high energy efficient air fryer according to the present disclosure. The air fryer includes a body 10, within which are located a first cooking chamber 11 and a second cooking chamber 12. The first and second cooking chambers 11 and 12 are suitably arranged with a vertical spacing between them. Inside the first and second cooking chambers 11 and 12, there are respectively a first hot air circulation system 13 and a second hot air circulation system 14. These systems are adapted to generate a circulating hot airflow to heat the food inside the first and second cooking chambers 11 and 12. By arranging the first and second cooking chambers 11 and 12 with vertical spacing within the body 10, and setting up the first hot air circulation system 13 and the second hot air circulation system 14 inside them, it is possible not only to reduce the lateral volume of the air fryer, lower its spatial occupation, and improve space utilization, but also to use the first and second hot air circulation systems 13 and 14 to heat the food inside the first and second cooking chambers 11 and 12 simultaneously, effectively improving cooking efficiency.

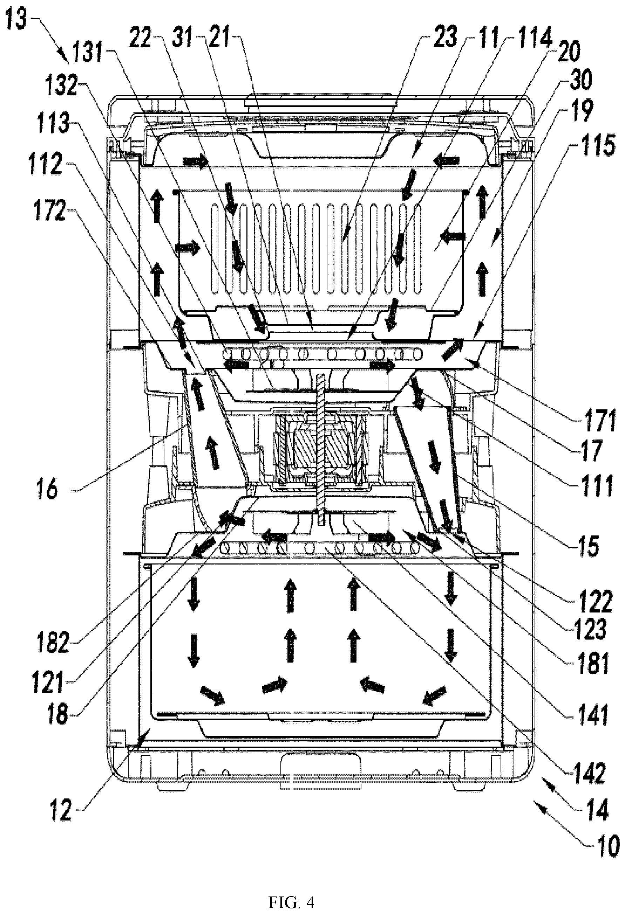

As shown in FIGS. 4, the first hot air circulation system 13 includes a first circulation fan 131 and a first heating component 132, while the second hot air circulation system 14 includes a first circulation fan 141 and a second heating component 142. The first and second circulation fans 131 and 141 are adapted to generate a circulating airflow, and the first and second heating components 132 and 142 are adapted to heat the circulating airflow produced by the first and second circulation fans 131 and 141 to form a circulating hot airflow, thereby heating the food inside the first and second cooking chambers 11 and 12.

As shown in FIGS. 4, the first cooking chamber 11 is equipped with a first air outlet 111 corresponding to the first circulation fan 131, and the second cooking chamber 12 is equipped with a second air outlet 121 corresponding to the second circulation fan 141. Inside the body 10, there are first and second ducts 15 and 16, where the first duct 15 is adapted to connect the first air outlet 111 and the second cooking chamber 12, and the second duct 16 is adapted to connect the second air outlet 121 and the first cooking chamber 11. By setting up the first and second ducts 15 and 16 within the body 10 to connect the first and second cooking chambers 11 and 12, it allows the circulating hot airflow to circulate between the first and second cooking chambers 11 and 12. This not only reduces heat loss, improves energy utilization efficiency, and lowers energy consumption while ensuring cooking efficiency, but also allows for repeated heating of the circulating hot airflow inside the first and second cooking chambers 11 and 12 through the first and second heating components 132 and 142 to compensate for heat loss during the flow process, effectively improving cooking efficiency.

As shown in FIG. 4, in an optional embodiment, the internal dimensions of one end of the first duct 15 connected to the first air outlet 111 are larger than those of the other end connected to the second cooking chamber 12, and the internal dimensions of one end of the second duct 16 connected to the second air outlet 121 are larger than those of the other end connected to the first cooking chamber 11. By setting the internal dimensions of one end of the first duct 15 connected to the first air outlet 111 to be larger than those of the other end connected to the second cooking chamber 12, and setting the internal dimensions of one end of the second duct 16 connected to the second air outlet 121 to be larger than those of the other end connected to the first cooking chamber 11, it is possible to increase the air intake and speed of the first and second ducts 15 and 16, allowing the circulating hot airflow inside the first and second cooking chambers 11 and 12 to enter the first and second ducts 15 and 16 more quickly and effectively, thereby improving the circulation speed of the hot airflow between the first and second cooking chambers 11 and 12 and enhancing cooking efficiency. At the same time, in another optional embodiment, the internal dimensions of one end of the first duct 15 connected to the first air outlet 111 can be set to be larger than those of the other end connected to the second cooking chamber 12, or the internal dimensions of one end of the second duct 16 connected to the second air outlet 121 can be set to be larger than those of the other end connected to the first cooking chamber 11, which can also achieve the aforementioned effects.

Furthermore, in an optional embodiment, the internal dimensions of the first duct 15 are adapted to gradually increase from the end connected to the first air outlet 111 to the end connected to the second cooking chamber 12, and the internal dimensions of the second duct 16 are adapted to gradually increase from the end connected to the second air outlet 121 to the end connected to the first cooking chamber 11. Such an arrangement not only ensures smoother airflow out of the first and second ducts 15 and 16, effectively improving the circulation speed of the hot airflow between the first and second cooking chambers 11 and 12 and enhancing cooking efficiency, but also allows for the diffusion and introduction of the circulating hot airflow from the first and second ducts 15 and 16 into the first and second cooking chambers 11 and 12, avoiding regional aggregation of the circulating hot airflow that could lead to differentiated cooking areas, effectively improving the cooking effect of the air fryer. In another optional embodiment, the internal dimensions of the first duct 15 are adapted to gradually increase from the end connected to the first air outlet 111 to the end connected to the second cooking chamber 12, or the internal dimensions of the second duct 16 are adapted to gradually increase from the end connected to the second air outlet 121 to the end connected to the first cooking chamber 11. By setting the internal dimensions of the first duct 15 to gradually increase from the end connected to the first air outlet 111 to the end connected to the second cooking chamber 12, or setting the internal dimensions of the second duct 16 to gradually increase from the end connected to the second air outlet 121 to the end connected to the first cooking chamber 11, the aforementioned effects can also be achieved.

As shown in FIG. 4, in the air fryer, the region of the first duct 15 corresponding to the first circulation fan 131 and the first air outlet 111 is adapted to be an arc-shaped guide part facing the direction of the second cooking chamber 12, and the region of the second duct 16 corresponding to the second circulation fan 141 and the second air outlet 121 is adapted to be an arc-shaped guide part facing the direction of the first cooking chamber 11. By setting the region of the first duct 15 corresponding to the first circulation fan 131 and the first air outlet 111 as an arc-shaped guide part facing the direction of the second cooking chamber 12, and setting the region of the second duct 16 corresponding to the second circulation fan 141 and the second air outlet 121 as an arc-shaped guide part facing the direction of the first cooking chamber 11, it allows the circulating hot airflow inside the first and second cooking chambers 11 and 12 to be better guided into the first and second ducts 15 and 16, thereby effectively improving the circulation speed of the hot airflow between the first and second cooking chambers 11 and 12 and enhancing cooking efficiency. At the same time, in another optional embodiment, the region of the first duct 15 corresponding to the first circulation fan 131 and the first air outlet 111 can be set as an arc-shaped guide part facing the direction of the second cooking chamber 12, or the region of the second duct 16 corresponding to the second circulation fan 141 and the second air outlet 121 can be set as an arc-shaped guide part facing the direction of the first cooking chamber 11, which can also achieve the aforementioned effects.

As shown in FIG. 4, the first cooking chamber 11 is equipped with a first air inlet 112 corresponding to the second duct 16, and the rim of the first air inlet 112 is provided with a first annular flange 113 folded outward from the first cooking chamber 11. One end of the second duct 16 is suitable for communicating with the second air outlet 121, and the other end is suitable for being sleeved over the outside of the first annular flange 113; the second cooking chamber 12 is equipped with a second air inlet 122 corresponding to the first duct 15, and the rim of the second air inlet 122 is provided with a second annular flange 123 folded outward from the second cooking chamber 12. One end of the first duct 15 is suitable for communicating with the first air outlet 111, and the other end is suitable for being sleeved over the outside of the second annular flange 123. By sleeving the first duct 15 and the second duct 16 over the outside of the first annular flange 113 and the second annular flange 123, respectively, it is possible to simplify the structure of the air fryer, reduce production costs and user usage costs, and also reduce the difficulty of installing the first duct 15 and the second duct 16; at the same time, the first annular flange 113 and the second annular flange 123 are suitable for positioning the first duct 15 and the second duct 16, by positioning the first duct 15 and the second duct 16 with the first annular flange 113 and the second annular flange 123, which can effectively reduce the difficulty of installing the first duct 15 and the second duct 16, thereby reducing production costs and user usage costs; in addition, the first annular flange 113 and the second annular flange 123 are also suitable for limiting the first duct 15 and the second duct 16, by limiting the first duct 15 and the second duct 16 with the first annular flange 113 and the second annular flange 123, which can avoid the first duct 15 and the second duct 16 from becoming misaligned with the first air inlet 113 and the second air inlet 123 during use, causing the circulating hot airflow to fail to enter the first cooking chamber 11 and the second cooking chamber 12 normally as well as flowing outwards, thus causing damage to electrical components, effectively improving the performance stability and usage safety of the air fryer. In another optional embodiment, the first cooking chamber 11 is equipped with a first air inlet 112 corresponding to the second duct 16, and the rim of the first air inlet 112 is provided with a first annular flange 113 folded outward from the first cooking chamber 11. One end of the second duct 16 is suitable for communicating with the second air outlet 121, and the other end is suitable for being sleeved over the outside of the first annular flange 113; or the second cooking chamber 12 is equipped with a second air inlet 122 corresponding to the first duct 15, and the rim of the second air inlet 122 is provided with a second annular flange 123 folded outward from the second cooking chamber 12. One end of the first duct 15 is suitable for communicating with the first air outlet 111, and the other end is suitable for being sleeved over the outside of the second annular flange 123. By setting the first annular flange 113 or the second annular flange 123 at the rim of the first air inlet 112 or the second air inlet 122, and sleeving the first duct 15 or the second duct 16 over the outside of the first annular flange 113 or the second annular flange 123, the aforementioned effects can also be achieved.

Specifically, as shown in FIG. 4 to 6, the first cooking chamber 11 includes a first air duct plate 17 that constitutes at least part of the inner wall of the first cooking chamber 11. The middle part of the first air duct plate 17 is suitable for forming a first concave cavity 171 that opens towards the middle of the first cooking chamber 11. Inside the first concave cavity 171, there are a first circulation fan 131 and a first heating component 132. The first air outlet 111 is located on the side wall of the first concave cavity 171 opposite to the first circulation fan 131; the second cooking chamber 12 includes a second air duct plate 18 that constitutes at least part of the inner wall of the second cooking chamber 12. The middle part of the second air duct plate 18 is suitable for forming a second concave cavity 181 that opens towards the middle of the second cooking chamber 12. Inside the second concave cavity 181, there are a second circulation fan 141 and a second heating component 142. The second air outlet 121 is located on the side wall of the second concave cavity 12 opposite to the second circulation fan 141. By setting the first air outlet 111 and the second air outlet 121 respectively on the side walls of the first concave cavity 171 and the second concave cavity 181 opposite to the first circulation fan 131 and the second circulation fan 141, it can make the hot air ejected by the first circulation fan 131 and the second circulation fan 141 enter the first duct 15 and the second duct 16 through the first air outlet 111 and the second air outlet 121 more effectively, thus quickly circulating between the first cooking chamber and the second cooking chamber, effectively improving the circulation speed and cooking efficiency of the hot air inside the first cooking chamber 11 and the second cooking chamber 12.

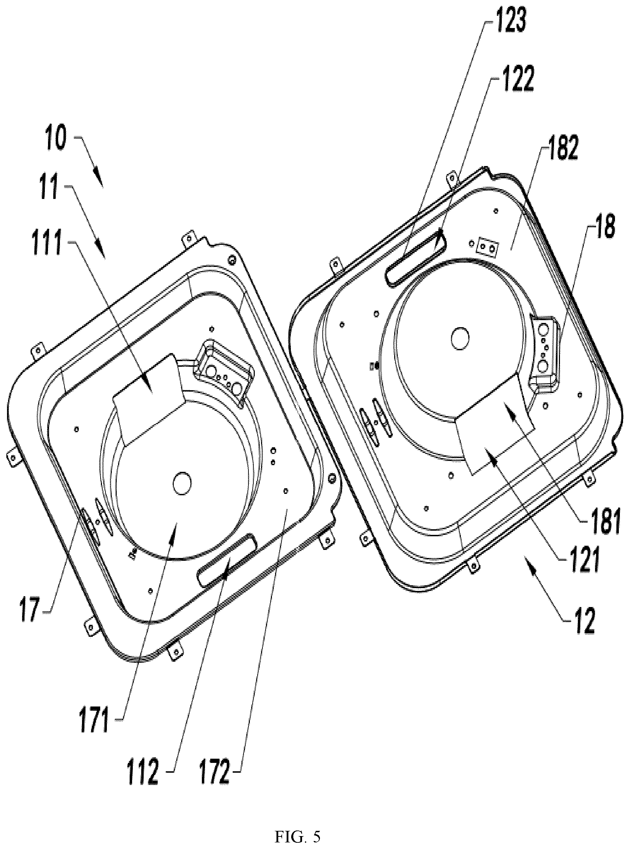

As shown in FIG. 4 and 5, the outer side of the opening of the first concave cavity 171 is provided with a first extension part 172 extending outward, and the first extension part 172 is provided with a first air inlet 112 communicating with the first cooking chamber 11. The outer side of the opening of the second concave cavity 181 is provided with a second extension part 182 extending outward, and the second extension part 182 is provided with a second air inlet 122 communicating with the second cooking chamber 12. By setting the first air inlet 112 and the second air inlet 122 respectively on the first extension part 172 and the second extension part 182 of the outer side of the opening of the first concave cavity 171 and the second concave cavity 181, it can avoid mutual influence between the air inlet and outlet of the first cooking chamber 11 and the second cooking chamber 12, effectively improving the circulation speed of hot air between the first cooking chamber 11 and the second cooking chamber 12, thereby improving cooking efficiency.

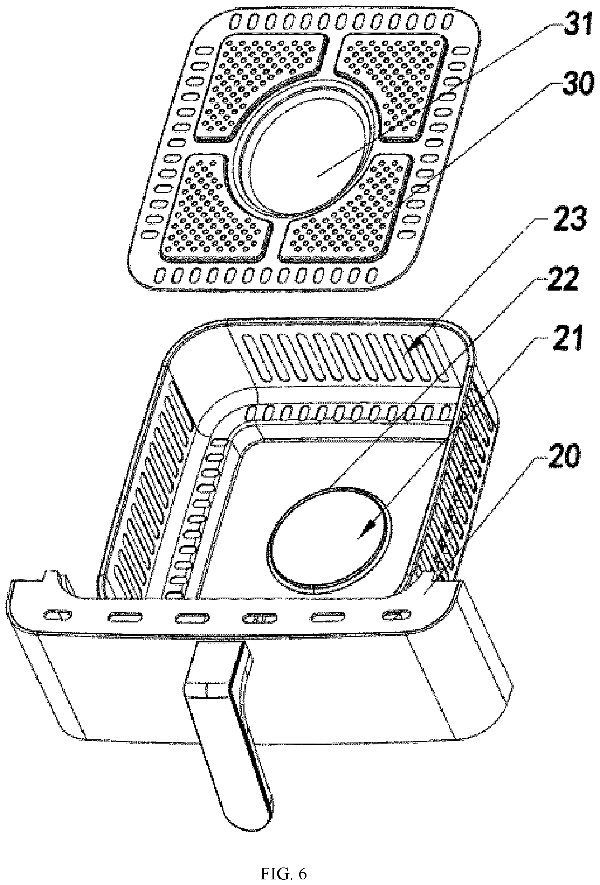

As shown in FIG. 4 and 6, the bottom wall of the first cooking chamber 11 is provided with a return air inlet 114 corresponding to the first circulation fan 131 and communicating with the first concave cavity 171. The outer side of the return air inlet 114 is provided with an air outlet 115; the first cooking chamber 11 is internally provided with a top-opened first frying basket 20, and a hot air gap 19 suitable for forming between the inner wall of the first frying basket 20 and the inner wall of the first cooking chamber 11. The bottom of the first frying basket 20 is provided with a hot air outlet 21 corresponding to at least part of the return air inlet 114. The circulating hot airflow generated by the first circulation fan 131 and the first heating component 132 is suitable for entering the hot air gap 19 through the air outlet 115 and then flowing in the direction of the top open end of the first frying basket 20, entering the first frying basket 20 from the top open end, and returning to the first concave cavity 171 through the hot air outlet 21 and the return air inlet 114. By setting the first circulation fan 131 and the first heating component 132 at the bottom of the first cooking chamber 11, and guiding the circulating airflow generated by the first circulation fan 131 and the first heating component 132 through the hot air gap 19 to the top of the first cooking chamber 11, entering the first frying basket 20 from the top open end, it can reduce the problems such as food scorching caused by the direct blowing of the circulating hot airflow into the first frying basket 20, effectively improving the cooking effect. In another optional embodiment, the first heating component 132 is also suitable for being set at the top of the first cooking chamber 11, and at least partially corresponding to the top open end of the first frying basket 20. By setting the first heating component 132 at the top of the first cooking chamber 11, and at least partially corresponding to the top open end of the first frying basket 20, it can not only realize the heating of the circulating airflow generated by the first circulation fan 131 that is about to enter the first frying basket 20, so as to reduce the heat loss of the circulating hot airflow when entering the first frying basket 20, effectively improving cooking efficiency and cooking effect, but also can realize the heating of the top of the food in the first frying basket 20 with the first heating component 132, effectively improving cooking efficiency and user experience.

As shown in FIG. 4, the periphery of the hot air outlet 21 is provided with an upwardly folded flange 22, and the first frying basket 20 is internally suspended with a first frying plate 30 with holes. The middle part of the first frying plate 30 is provided with a shielding part 31 corresponding to the hot air outlet 221 and having a closed structure, and the shielding part 31 is suitable for covering the hot air outlet 21. By setting the upwardly folded flange 22 on the periphery of the hot air outlet 21, it can block the oil and/or water produced by cooking food in the first frying basket 20, so as to avoid the pollution of the external environment after the oil and/or water flow out through the hot air outlet 21, and the inflow into the first concave cavity 17, thereby causing difficulties in cleaning, etc., effectively improving user experience; at the same time, by suspending the first frying plate 30 with holes in the first frying basket 20, it can not only realize the support of food, so that the circulating hot airflow heated by the first heating component 132 generated by the first circulation fan 131 can better heat the upper and lower surfaces of the food, effectively improving food cooking efficiency and cooking effect, but also can reserve enough space below the first frying plate 30, so that the circulating hot airflow can pass through and flow out from the hot air outlet 21, effectively improving the heat flow circulation efficiency in the first cooking chamber 11, thereby improving cooking efficiency; in addition, by setting the shielding part 31 on the first frying plate 30 to cover the hot air outlet 21, it can also block the oil and/or water produced when cooking food on the first frying plate 30, so as to avoid the pollution of the external environment caused by the oil and/or water flowing directly through the hot air outlet 21 out of the first frying basket 20, and the inflow into the first concave cavity 17 causing difficulties in cleaning, etc., effectively improving user experience.

As shown in FIG. 4 and 6, the side wall of the first frying basket 20 is provided with multiple air inlets 23 communicating the hot air gap 19 and the inner cavity of the first frying basket 20. The air inlets 23 are preferably vertically extending strip-shaped holes, and at least part of the circulating hot airflow generated by the first circulation fan 131 and the first heating component 132 enters the first frying basket 20 through the air inlets 23 after entering the hot air gap 19. By setting the air inlets 23 on the side wall of the first frying basket 20, it can realize the introduction of the circulating hot airflow in the hot air gap 19 into the first frying basket 20 from multiple directions, so as to heat the food in the first frying basket 20, which can not only effectively improve the cooking effect, but also effectively improve the heat flow circulation efficiency in the first cooking chamber 11, thereby improving cooking efficiency.

### Embodiment 3:

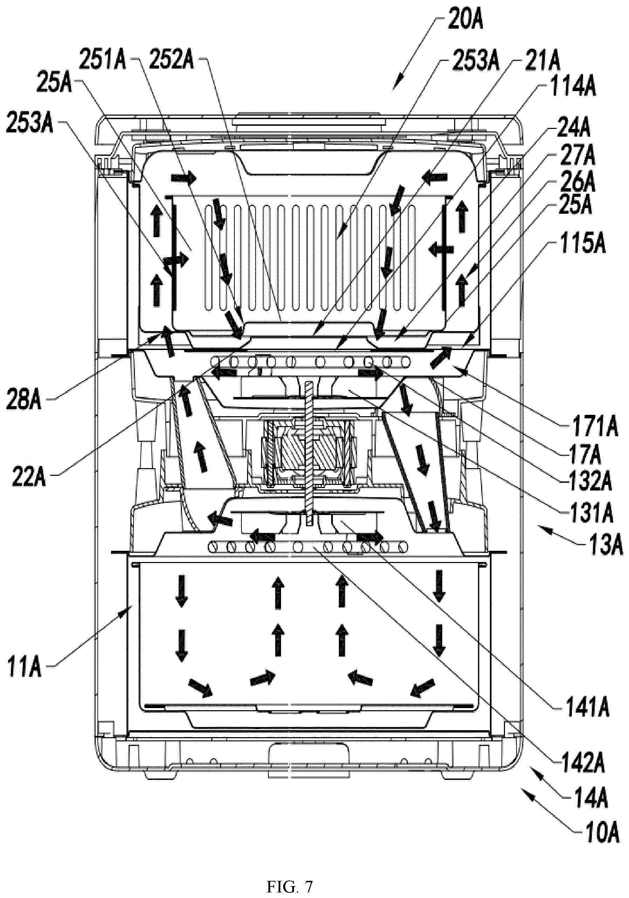

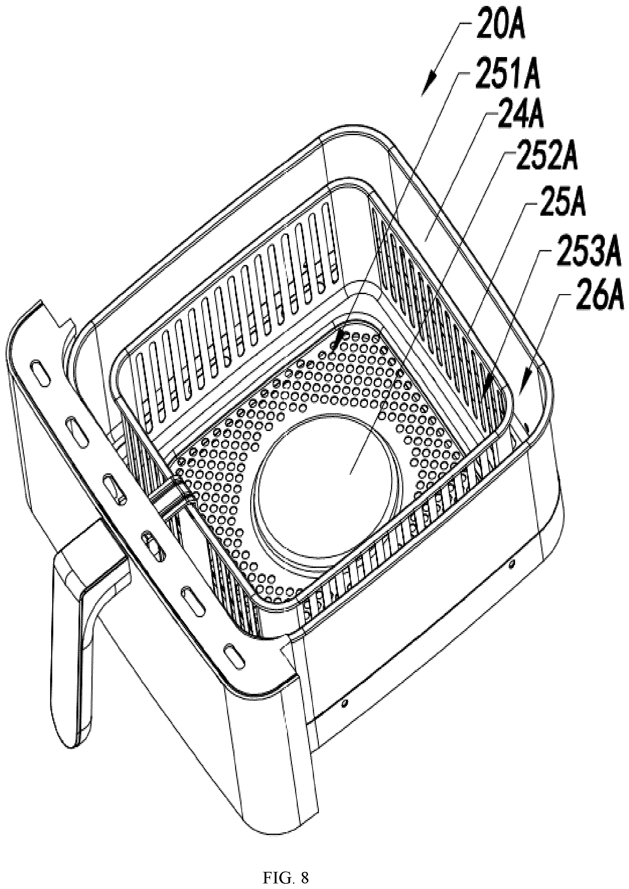

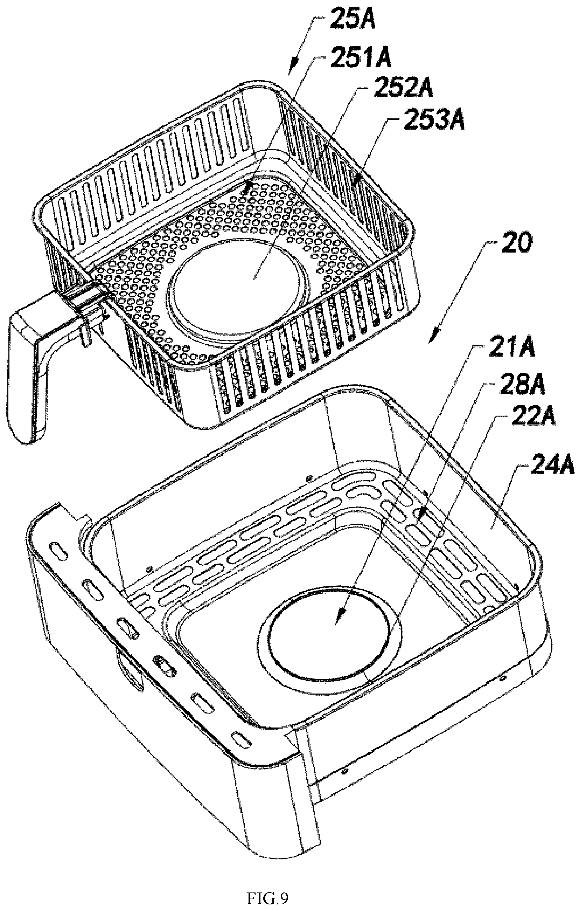

FIGS. 7 to 9 are schematic diagrams of a third embodiment of a high energy efficient air fryer according to the present disclosure. Compared with the air fryer in the second embodiment, the third embodiment has some structures and functions that are consistent, which will not be reiterated here; the difference between the air fryer in the third embodiment and the air fryer in the second embodiment lies in the different structure of the first frying basket 20.

As shown in FIGS. 7, the air fryer includes a body 10A, a first cooking chamber 11A and a second cooking chamber 12A set within the body 10A, where the first cooking chamber 11A and the second cooking chamber 12A are suitable for being arranged at intervals from top to bottom; the first cooking chamber 11A and the second cooking chamber 12A are respectively equipped with a first hot air circulation system 13A and a second hot air circulation system 14A, which are suitable for generating a circulating hot airflow to heat the food inside the first cooking chamber 11A and the second cooking chamber 12A. The first hot air circulation system 13A includes a first circulation fan 131A and a first heating component 132A, and the second hot air circulation system 14A includes a second circulation fan 141A and a second heating component 142A; the first circulation fan 131A and the second circulation fan 141A are suitable for generating a circulating airflow, and the first heating component 132A and the second heating component 142A are suitable for heating the circulating airflow generated by the first and second circulation fans 131A and 141A to form a circulating hot airflow, thereby heating the food inside the first cooking chamber 11A and the second cooking chamber 12A.

As shown in FIGS. 7, the bottom of the first cooking chamber 11A is equipped with a first air duct plate 17A that constitutes the first cooking chamber 11A. The middle part of the first air duct plate 17A is suitable for being recessed to form a first concave cavity 171A that opens towards the middle of the first cooking chamber 11A. Inside the first concave cavity 171A, there are the first circulation fan 131A and the first heating component 132A. The bottom wall of the first cooking chamber 11A is equipped with a return air inlet 114A corresponding to the first circulation fan 131A and communicating with the first concave cavity 171A. On the outside of the return air inlet 114A, there is an air outlet 115; inside the first cooking chamber 11A, there is a first frying basket 20A with a top opening. The first frying basket 20A includes an outer pot 24A and an inner pot 25A suspended within the outer pot 24A. The side wall of the inner pot 25A and the side wall of the outer pot 24A form a first hot air gap 26A that communicates with the cavity inside the inner pot 25A. The bottom wall of the inner pot 25A and the bottom wall of the outer pot 24A are suitable for forming a second hot air gap 27A. The bottom of the outer pot 24A is equipped with a hot air outlet 21A that communicates with the second hot air gap 27A and corresponds to at least part of the return air inlet 114A. On the outside of the hot air outlet 21A, there is a hot air inlet 28A that communicates with the first hot air gap 26A and corresponds to at least part of the air outlet 115A. The bottom of the inner pot 25A is equipped with ventilation holes 251A. The circulating hot airflow generated by the first circulation fan 131A and the first heating component 132A is suitable for entering the first hot air gap 26A through the air outlet 115A and the hot air inlet 29A, flowing in the direction of the open top of the inner pot 25A, entering the inner pot 25A from the open top, and returning to the first concave cavity 171A through the ventilation holes 251A, the hot air outlet 21A, and the return air inlet 114A. By setting the first circulation fan 131A at the bottom of the first cooking chamber 11A, and guiding the circulating hot airflow generated by the first circulation fan 131A and the first heating component 132A through the first hot air gap 26A to the top of the inner pot 25A, entering the inner pot 25A from the open top, and returning from the ventilation holes 251A at the bottom of the inner pot 25A and the second hot air gap 26A through the hot air outlet 21A and the return air inlet 114A to the first concave cavity 171A, it is not only possible to reduce problems such as food scorching caused by the direct blowing of the circulating hot airflow into the inner pot 25A, but it can also heat the upper and lower surfaces of the food inside the inner pot 25A, effectively improving cooking efficiency and cooking effect; at the same time, by setting the first frying basket 20A as an inner and outer double-layer structure, and setting the first hot air gap 26A that communicates with the first concave cavity 17A between the inner pot 25A and the outer pot 24A, it is possible to introduce the circulating hot airflow from the top periphery of the inner pot 25A into the inner pot 25A, thereby heating the food inside the inner pot 25A and effectively improving the cooking effect. In another optional embodiment, the first heating component 132A is also suitable for being set at the top of the first cooking chamber 11A, and at least partially corresponding to the open top of the inner pot 25A. By setting the first heating component 132A at the top of the first cooking chamber 11A, and at least partially corresponding to the open top of the inner pot 25A, it is not only possible to heat the circulating airflow generated by the first circulation fan 13 1A that is about to enter the inner pot 25A, to reduce the heat loss of the circulating hot airflow when entering the inner pot 25A, effectively improving cooking efficiency and cooking effect, but it can also use the first heating component 132A to heat the top of the food inside the inner pot 25A, effectively improving cooking efficiency and user experience.

As shown in FIGS. 7, the periphery of the hot air outlet 21A is provided with an upwardly folded flange 22A, and the bottom wall of the inner pot 25A is provided with a shielding part 252A corresponding to the hot air outlet 21A and having a closed structure. The shielding part 252A is suitable for covering the hot air outlet 21A. By setting the upwardly folded flange 22A on the periphery of the hot air outlet 21A, it can block the oil and/or water flowing out of the inner pot 25A through the ventilation hole 252A, so as to avoid the pollution of the external environment after the oil and/or water flow out through the hot air outlet 21A, and the inflow into the first concave cavity 171A, thereby causing difficulties in cleaning, etc., effectively improving user experience; at the same time, by setting the shielding part 252A with a closed structure covering the hot air outlet 21A on the bottom wall of the inner pot 25A, it can block the oil and/or water produced when cooking food inside the inner pot 25A, so as to avoid the oil and/or water directly flowing out of the outer pot 24A through the hot air outlet 21A, thus causing pollution to the external environment and the inflow into the first concave cavity 171A causing difficulties in cleaning, effectively improving user experience.

As shown in FIGS. 7 to 9, the side wall of the inner pot 25A is provided with multiple air inlets 253A communicating the first hot air gap 26A and the inner cavity of the inner pot 25A. The air inlets 253A are preferably vertically extending strip-shaped holes, and at least part of the circulating hot airflow generated by the first circulation fan 131A and the first heating component 132A enters the inner pot 25A through the air inlets 253A after entering the first hot air gap 26A. By setting the air inlets 253A on the side wall of the inner pot 25A, it can realize the introduction of the circulating hot airflow in the first hot air gap 26A into the inner pot 25A from multiple directions, so as to heat the food in the inner pot 25A, which can not only effectively improve the cooking effect, but also effectively improve the heat flow circulation efficiency in the first frying basket 20A, thereby improving cooking efficiency.

The content above is a further detailed explanation made in conjunction with specific preferred embodiments of this application, and the objectives of this application have been completely and effectively achieved. Those skilled in the art should understand that the above description and the embodiments shown in the accompanying drawings are only for illustration and do not limit this application. For those of ordinary skill in the art to which this application pertains, without departing from the premise of this application, several simple deductions or substitutions can also be made, all of which should be regarded as falling within the patent protection scope determined by the claims submitted with this application.

It should be noted that the terms used herein are for the purpose of describing specific embodiments only and are not intended to limit exemplary embodiments according to the present disclosure. As used herein, the singular forms are intended to include the plural forms as well, unless the context clearly indicates otherwise. Furthermore, it should also be understood that the terms "including" and/or "including", when used in this specification, indicate the presence of features, steps, operations, devices, components, and/or combinations thereof.

Relative arrangements, numerical expressions, and numerical values of the components and steps described in these embodiments do not limit the scope of the present disclosure unless specifically stated otherwise. At the same time, it should be understood that for convenience of description, the dimensions of the parts shown in the drawings are not drawn to an actual scale. Techniques, methods, and apparatus known to those of ordinary skill in the relevant art may not be discussed in detail, but where appropriate, should be considered part of the authorized specification. In all of the examples shown and discussed herein, any specific values should be interpreted as merely exemplary, and not as limiting. Accordingly, other examples of exemplary embodiments may have different values. It should be noted that like reference numerals and letters denote like items in the following figures, and therefore, once an item is defined in one figure, it need not be further discussed in subsequent figures.

In the description of the present disclosure, it should be understood that the orientation or positional relationship indicated by orientation words such as "front, back, up, down, left, right," "transverse, vertical, perpendicular, horizontal," and "top, bottom," and the like are generally based on the orientation or positional relationship shown in the drawings, merely for convenience of describing the present disclosure and for simplicity of description, and unless otherwise stated, the orientation words do not indicate or imply that the device or element referred to must have a particular orientation or be constructed and operated in a particular orientation, and therefore are not to be construed as limiting the scope of protection of the present disclosure; and the orientation words "inside and outside" refer to inside and outside with respect to the contour of each component itself.

For ease of description, spatially relative terms such as "on top of", "over", "on the upper surface", "above", and the like may be used herein to describe the spatial positional relationship between one device or feature and other devices or features as illustrated in the figures. It should be understood that the spatially relative terms are intended to encompass different orientations of the device in use or operation in addition to the orientation depicted in the figures. For example, if the devices in the figures are inverted, devices described as "above" or "over" other devices or constructions would then be positioned "below" or "beneath" the other devices or constructions. Thus, the exemplary term "above" can include both orientations of "above" and "below." The device can also be positioned in other different ways (rotated by 90 degrees or at other orientations) and the spatially relative depictions used herein are interpreted accordingly. In addition, it should be noted that the use of the terms "first", "second", and the like to define components is merely for ease of distinguishing between the corresponding components, and if not otherwise stated, the terms have no special meaning and therefore should not be interpreted to limit the scope of protection of the present disclosure.

The high energy efficient air fryer provided by the present disclosure has been described in detail above, the principles and embodiments of the present disclosure have been described herein with reference to specific examples, the description of the above embodiments is provided only to help understand the method of the present disclosure and its core idea; and meanwhile, variations will be made to the specific embodiments and the scope of application by those of ordinary skill in the art in view of the idea of the present disclosure. In summary, the contents of this specification should not be construed as limiting the present disclosure.

### Industrial applicability

In the air fryer in this example, by arranging the first cooking chamber and the second cooking chamber spaced apart from top to bottom within the body, it is not only possible to cook multiple types of food at the same time, effectively improving cooking efficiency, but it can also reduce the lateral volume of the air fryer while improving cooking efficiency, decrease the space occupied by the air fryer, enhance space utilization, and effectively improve user experience; at the same time, by setting up the first duct and the second duct to communicate with the first cooking chamber and the second cooking chamber, it is possible to introduce the circulating hot airflow discharged from the first cooking chamber into the second cooking chamber for reuse; and/or introduce the circulating hot airflow discharged from the second cooking chamber into the first cooking chamber for reuse, effectively improving energy utilization efficiency, ensuring cooking efficiency while reducing energy consumption; in addition, by setting up the first duct and the second duct to communicate with the first cooking chamber and the second cooking chamber, it allows the circulating hot airflow to circulate between the first cooking chamber and the second cooking chamber, effectively improving the product's thermal efficiency.

By setting the internal dimensions of one end of the first duct connected to the second cooking chamber larger than the internal dimensions of the other end connected to the first air outlet, and/or setting the internal dimensions of one end of the second duct connected to the first cooking chamber larger than the internal dimensions of the other end connected to the second air outlet, it is possible to increase the air intake and air intake speed of the first duct and the second duct, effectively improving the circulation speed of the hot airflow between the first cooking chamber and the second cooking chamber, thereby improving cooking efficiency.

## Claims

1. A high energy efficient air fryer, including a body (100, 10, 10A), wherein the body (100, 10, 10A) is internally provided with a first cooking chamber (110, 11, 11A) and a second cooking chamber (120, 12, 12A), and the first cooking chamber (110, 11, 11A) is provided with a first air outlet (1110, 111, 111A) the second cooking chamber (120, 12, 12A) is equipped with a second circulation fan (1410, 141, 141A) **characterized in that** the first cooking chamber (110, 11, 11A) is equipped with a first circulation fan (1310, 131, 131A), and the first cooking chamber (110, 11, 11A) is provided with a first air outlet (1110, 111, 111A) corresponding to the first circulation fan (1310, 131, 131A), the first air outlet (1110, 111, 111A) is connected to the second cooking chamber (120, 12, 12A) through a first pipeline (150, 15), the second cooking chamber (120, 12, 12A) is equipped with a second circulation fan (1410, 141, 141A) and the second cooking chamber (120, 12, 12A) is provided with a second air outlet (1210, 121, 121A) corresponding to the second circulation fan (1410, 141, 141A), the second air outlet (1210, 121, 121A) is connected to the first cooking chamber (110, 11, 11A) through a second pipeline (160, 16).

2. The high energy efficient air fryer according to claim 1, wherein the first cooking chamber (110, 11, 11A) is equipped with a first heating tube (1321), the second cooking chamber (120, 12, 12A) is equipped with a second heating tube (1421), and the rated power of the first heating tube (1321) is greater than or less than the rated power of the second heating tube (1421).

3. The high energy efficient air fryer according to claim 1, wherein the body (100, 10, 10A) is provided with a motor (400), and the motor (400) is drive-connected to the first circulation fan (1310, 131, 131A) and the second circulation fan (1410, 141, 141A); and
further, wherein the motor (400) is located between the first cooking chamber (110, 11, 11A) and the second cooking chamber (120, 12, 12A), the motor (400) has a rotating shaft on both sides relative to the first cooking chamber (110, 11, 11A) and the second cooking chamber (120, 12, 12A), the rotating shafts respectively extend into the first cooking chamber (110, 11, 11A) and the second cooking chamber (120, 12, 12A) to connect with the first circulation fan (1310, 131, 131A) and the second circulation fan (1410, 141, 141A).

4. The high energy efficient air fryer according to claim 1, wherein the first cooking chamber (110, 11, 11A) includes a first air duct plate (170, 17, 17A) forming part of the inner wall of the first cooking chamber, the middle of the first air duct plate (170, 17, 17A) is a first concave cavity (1710,171,171A) with an opening facing the middle of the first cooking chamber (110, 11, 11A), the first circulation fan (1310, 131, 131A) is located in the first concave cavity (1710, 171, 171A), and the first air outlet (1110, 111, 111A) is located on the side wall corresponding to the first circulation fan (1310, 131, 131A) of the first concave cavity (1710, 171, 171A); the second cooking chamber (120, 12, 12A) includes a second air duct plate (180, 18) forming part of the inner wall of the second cooking chamber, The middle of second air duct plate (180, 18) is a second concave cavity (1810, 181) with an opening facing the middle of the second cooking chamber (120, 12, 12A), the second circulation fan (1410, 141, 141A) is located in the second concave cavity (1810, 181), and the second air outlet (1210, 121, 121A) is located on the side wall corresponding to the second circulation fan (1410, 141, 141A) of the second concave cavity (1810, 181); and
further, wherein the mouth edge of the first concave cavity (1710, 171, 171A) is bent outward to form a first extension part (1720, 172, 172A), and the first extension part (1720, 172, 172A) is provided with a first air inlet (1120, 112, 112A) which communicating with the first cooking chamber (110, 11, 11A), the first air inlet (1120, 112, 112A) is connected to the second air outlet (1210, 121, 121A) through the second pipeline (160, 16); the mouth edge of the second concave cavity (1810, 181) is bent outward to form a second extension part (1820, 182, 182A), and the second extension part (1820, 182, 182A) is provided with a second air inlet (1220, 122, 122A) which communicating with the second cooking chamber (120, 12, 12A), the second air inlet (1220, 122, 122A) is connected to the first air outlet (1110, 111, 111A) through the first pipeline (150, 15); and
further, wherein the first air inlet (1120, 112, 112A) and the first air outlet (1110, 111, 111A) are respectively located on opposite sides of the first air duct plate (170, 17, 17A), and the second air inlet (1220, 122, 122A) and the second air outlet (1210, 121, 121A) are respectively located on the opposite sides of the second air duct plate (180, 18); and
further, wherein the first cooking chamber (110, 11, 11A) and the second cooking chamber (120, 12, 12A) are arranged vertically spaced apart, the first air inlet (1120, 112, 112A) is located directly above the second air outlet (1210, 121, 121A), and the first air outlet (1110, 111, 111A) is located directly above the second air inlet (1220, 122, 122A); or
the first cooking chamber (110, 11, 11A) and the second cooking chamber (120, 12, 12A) are arranged at intervals on both sides, the first air inlet (1120, 112, 112A) is located directly to the left of the second air outlet (1210, 121, 121A), and the first air outlet (1110, 111, 111A) is located directly to the left of the second air inlet (1220, 122, 122A).

5. The high energy efficient air fryer according to claim 1, wherein the first cooking chamber (110, 11, 11A) and/or the second cooking chamber (120, 12, 12A) is provided with a ventilation hole (500) communicating with the external atmosphere; and
further, wherein the body (100, 10, 10A) includes an shell (190), the first cooking chamber (110, 11, 11A) and the second cooking chamber (120, 12, 12A) are located inside the shell (190), a heat dissipation chamber (600) is formed between the outer walls of the first cooking chamber (110, 11, 11A) and the second cooking chamber (120, 12, 12A) and the shell (190), the shell (190) is provided with an air outlet component (700) communicating the heat dissipation chamber (600) with the atmosphere, the air outlet component (700) includes a heat dissipation fan (800).

6. The high energy efficient air fryer according to any one of claims 1 to 5, wherein the internal size of the first pipeline (150, 15) connected to the first air outlet (1110, 111, 111A) is larger than the internal size connected to the second cooking chamber (120, 12, 12A); and/or
the internal size of the second pipeline (160, 16) connected to the second air outlet (1210, 121, 121A) is larger than the internal size connected to the first cooking chamber (110, 11, 11A).

7. The high energy efficient air fryer according to claim 6, wherein the internal size of the first pipeline (150, 15) gradually increases from the end connected to the first air outlet (1110, 111, 111A) to the end connected to the second cooking chamber (120, 12, 12A); and/or
the internal size of the second pipeline (160, 16) gradually increases from the end connected to the second air outlet (1210, 121, 121A) to the end connected to the first cooking chamber (110, 11, 11A).

8. The high energy efficient air fryer according to claim 6, wherein the area of the first pipeline (150, 15) corresponding to the first circulation fan (1310, 131, 131A) and the first air outlet (1110, 111, 111A) is an arc-shaped guide flow part facing the second cooking chamber (120, 12, 12A); and/or
the area of the second pipeline (160, 16) corresponding to the second circulation fan (1410, 141, 141A) and the second air outlet (1210, 121, 121A) is an arc-shaped guide flow part facing the first cooking chamber (110, 11, 11A).

9. The high energy efficient air fryer according to claim 6, wherein the first cooking chamber (110, 11, 11A) is provided with a first air inlet (1120, 112, 112A) corresponding to the second pipeline (160, 16), the mouth edge of the first air inlet (1120, 112, 112A) is provided with a first annular flange (113), the second pipeline (160, 16) is sleeved over the first annular flange (113); and/or
the second cooking chamber (120, 12, 12A) is provided with a second air inlet (1220, 122, 122A) corresponding to the first pipeline (150, 15), the mouth edge of the second air inlet (1220, 122, 122A) is provided with a second annular flange (123), the first pipeline (150, 15) is sleeved over the second annular flange (123).

10. The high energy efficient air fryer according to any one of claims 6 to 9, wherein the bottom of the first cooking chamber (110, 11, 11A) is provided with a first recessed cavity (1710,171,171A) that is concave downward, the first circulation fan(1310,131,131A) is located inside the first recessed cavity (1710, 171, 171A), the bottom wall of the first cooking chamber (110, 11, 11A) is provided with an air return port (114,114A) corresponding to the first circulation fan (1310,131,131A) and connected to the first recessed cavity (1710, 171, 171A), the outer side of the air return port (114,114A) is equipped with an air outlet (115,115A); the first cooking chamber (110, 11, 11A) is equipped with a first frying basket (20, 20A) with an open top, the first frying basket (20, 20A) is adapted to form a hot air gap (19) with the inner wall of the first cooking chamber (110, 11, 11A), the bottom of the first frying basket (20, 20A) is provided with a hot air outlet (21, 21A) corresponding to at least part of the air return port (114, 114A), the circulating airflow generated by the first circulation fan (1310, 131, 131A) is suitable to enter the hot air gap (19) through the air outlet (115, 115A), then flow in the direction of the open top of the first frying basket (20, 20A), enter the first frying basket (20, 20A) from the open top, and return to the first recessed cavity (1710, 171, 171A) through the hot air outlet (21, 21A) and the air return port (114, 114A), the airflow circulation path of the first circulation fan (1310,131, 131A) is equipped with a first heating component (132,132A).

11. The high energy efficient air fryer according to claim 10, wherein the periphery of the hot air outlet (21, 21A) is provided with an upwardly folded flange (22, 22A), there is a first frying plate (30) with a through-hole suspended inside the first frying basket (20, 20A), the middle part of the first frying plate (30) is provided with a shielding part (31) which corresponds to the hot air outlet (21, 21A), the shielding part (31) is suitable for covering the hot air outlet (21, 21A).

12. The high energy efficient air fryer according to claim 10, wherein the side wall of the first frying basket (20, 20A) is provided with multiple air inlet holes (23) that communicate with the hot air gap (19) and the inner cavity of the first frying basket (20, 20A), the air inlet holes (23) are vertically extending strip-shaped holes, the circulating airflow generated by the first circulation fan (1310, 131, 131A) enters the hot air gap (19) and at least partially passes through the air inlet holes (23) into the first frying basket (20, 20A).

13. The high energy efficient air fryer according to any one of claims 6 to 9, wherein the bottom of the first cooking chamber (110, 11, 11A) is provided with a first recessed cavity (1710, 171, 171A) that is concave downward, the first circulation fan(1310, 131, 131A) is located inside the first recessed cavity (1710, 171, 171A), the bottom wall of the first cooking chamber (110, 11, 11A) is provided with an air return port (114,114A) corresponding to the first circulation fan (1310, 131, 131A) and connected to the first recessed cavity (1710, 171, 171A), the outer side of the air return port (114,114A) is equipped with an air outlet (115, 115A); the first cooking chamber (110, 11, 11A) is equipped with a first frying basket (20, 20A) with an open top, the first frying basket (20, 20A) includes an outer pot (24A) and an inner pot (25A) suspended within the outer pot (24A), a first hot air gap (26A) communicates with the inner cavity of the inner pot (25A) is formed between the side wall of the inner pot (25A) and the side wall of the outer pot (24A), a second hot air gap (27A) is formed between the bottom wall of the inner pot (25A) and the bottom wall of the outer pot (24A), at the bottom of the outer pot (24A) is equipped with a hot air outlet (21, 21A) that communicates with the second hot air gap (27A) and corresponds to at least part of the air return ports (114, 114A), on the outside of the hot air outlet (21, 21A) is equipped with a hot air inlet (28A) that communicates with the first hot air gap (26A) and corresponds at least partially to the air outlets (115, 115A), the bottom of the inner pot (25A) is provided with ventilation holes (500), the circulating airflow generated by the first circulation fan (1310, 131, 131A) is suitable to enter the first hot air gap (26A) through the air outlets (115, 115A) and the hot air inlet (28A) and flow in the direction of the open top of the inner pot (25A), then enters the inner pot (25A) from the open top, and returns to the first recessed cavity (1710, 171, 171A) through the ventilation holes (500), the hot air outlet (21, 21A), and the air return ports (114, 114A), the airflow circulation path of the first circulation fan (1310,131,131A) is equipped with a first heating component (132, 132A).

14. The high energy efficient air fryer according to claim 13, wherein the periphery of the hot air outlet (21, 21A) is provided with an upwardly folded flange (22, 22A), on the bottom wall of the inner pot (25A) is provided with a shielding part (252A) which corresponds to the hot air outlet (21, 21A) and has a sealed structure, the shielding part (252A) is suitable for covering the hot air outlet (21, 21A).

15. The high energy efficient air fryer according to claim 13, wherein the side wall of the inner pot (25A) is provided with multiple air inlet holes (253A) that communicate with the first hot air gap (26A) and the inner cavity of the inner pot (25A), the air inlet holes (253A) are vertically extending strip-shaped holes, the circulating airflow generated by the first circulation fan (1310, 131, 131A) enters the first hot air gap (26A) and at least partially passes through the air inlet holes (253A) into the inner pot (25A).

## Patentansprüche

1. Eine hocheffiziente Heißluftfritteuse, bestehend aus einem Gehäuse (100, 10, 10A), wobei das Gehäuse (100, 10, 10A) intern mit einem ersten Garraum (110, 11, 11A) und einem zweiten Garraum (120, 12, 12A) ausgestattet ist.
**dadurch gekennzeichnet, dass** der erste Garraum (110, 11, 11A) mit einem ersten Umluftventilator (1310, 131, 131A) ausgestattet ist und über einen ersten Luftauslass (1110, 111, 111A) verfügt, der dem ersten Umluftventilator (1310, 131, 131A) entspricht; dieser erste Luftauslass (1110, 111, 111A) über eine erste Rohrleitung (150, 15) mit dem zweiten Garraum (120, 12, 12A) verbunden ist; der zweite Garraum (120, 12, 12A) mit einem zweiten Umluftventilator (1410, 141, 141A) ausgestattet ist und über einen zweiten Luftauslass (1210, 121, 121A) entsprechend dem zweiten Umluftventilator (1410, 141, 141A) verfügt, wobei der zweite Luftauslass (1210, 121, 121A) über eine zweite Rohrleitung (160, 16) mit dem ersten Garraum (110, 11, 11A) verbunden ist.

2. Die hocheffiziente Heißluftfritteuse nach Anspruch 1, wobei der erste Garraum (110, 11, 11A) mit einem ersten Heizrohr (1321) ausgestattet ist, der zweite Garraum (120, 12, 12A) mit einem zweiten Heizrohr (1421) ausgestattet ist und die Nennleistung des ersten Heizrohrs (1321) größer oder kleiner als die Nennleistung des zweiten Heizrohrs (1421) ist.

3. Die hocheffiziente Heißluftfritteuse nach Anspruch 1, wobei das Gehäuse (100, 10, 10A) mit einem Motor (400) versehen ist und der Motor (400) mit dem ersten Umluftventilator (1310, 131, 131A) und dem zweiten Umluftventilator (1410, 141, 141A) verbunden ist; und
wobei sich der Motor (400) ferner zwischen dem ersten Garraum (110, 11, 11A) und dem zweiten Garraum (120, 12, 12A) befindet, der Motor (400) über eine rotierende Welle auf beiden Seiten relativ zum ersten Garraum (110, 11, 11A) und zum zweiten Garraum (120, 12, 12A) verfügt; die rotierenden Wellen sich jeweils in den ersten Garraum (110, 11, 11A) und den zweiten Garraum (120, 12, 12A) erstrecken, um mit dem ersten Umluftventilator (1310, 131, 131A) und dem zweiten Umluftventilator (1410, 141, 141A) verbunden zu sein.

4. Die hocheffiziente Heißluftfritteuse nach Anspruch 1, wobei der erste Garraum (110, 11, 11A) eine erste Luftkanalplatte (170, 17, 17A) aufweist, die einen Teil der Innenwand des ersten Garraums bildet, wobei die Mitte der ersten Luftkanalplatte (170, 17, 17A) einen ersten konkaven Hohlraum (1710, 171, 171A) mit einer Öffnung zur Mitte des ersten Garraums (110, 11, 11A) bildet, der erste Umluftventilator (1310, 131, 131A) im ersten konkaven Hohlraum (1710, 171, 171A) angeordnet ist und der erste Luftauslass (1110, 111, 111A) an der Seitenwand angeordnet ist, die dem ersten Umwälzventilator (1310, 131, 131A) des ersten konkaven Hohlraums (1710, 171, 171A) entspricht; der zweite Garraum (120, 12, 12A) eine zweite Luftkanalplatte (180, 18) umfasst, die einen Teil der Innenwand des zweiten Garraums bildet; in der Mitte der zweiten Luftkanalplatte (180, 18) sich ein zweiter konkaver Hohlraum (1810, 181) mit einer Öffnung befindet, die zur Mitte des zweiten Garraums (120, 12, 12A) gerichtet ist; der zweite Umluftventilator (1410, 141, 141A) sich im zweiten konkaven Hohlraum (1810, 181) befindet, und der zweite Luftauslass (1210, 121, 121A) sich an der Seitenwand befindet, die dem zweiten Umluftventilator (1410, 141, 141A) des zweiten konkaven Hohlraums (1810, 181) entspricht; und
wobei ferner die Mündungskante des ersten konkaven Hohlraums (1710, 171, 171A) nach außen gebogen ist und einen ersten Verlängerungsteil (1720, 172, 172A) bildet, der mit einem ersten Lufteinlass (1120, 112, 112A) versehen ist, der mit dem ersten Garraum (110, 11, 11A) in Verbindung steht, und wobei der erste Lufteinlass (1120, 112, 112A) über die zweite Rohrleitung (160, 16) mit dem zweiten Luftauslass (1210, 121, 121A) verbunden ist; die Mündungskante des zweiten konkaven Hohlraums (1810, 181) nach außen gebogen ist und so einen zweiten Verlängerungsteil (1820, 182, 182A) bildet; wobei dieser zweite Verlängerungsteil (1820, 182, 182A) mit einem zweiten Lufteinlass (1220, 122, 122A) versehen ist, der mit dem zweiten Garraum (120, 12, 12A) in Verbindung steht; und wobei der zweite Lufteinlass (1220, 122, 122A) über die erste Rohrleitung (150, 15) mit dem ersten Luftauslass (1110, 111, 111A) verbunden ist;
wobei ferner der erste Lufteinlass (1120, 112, 112A) und der erste Luftauslass (1110, 111, 11A) jeweils auf gegenüberliegenden Seiten der ersten Luftkanalplatte (170, 17, 17A) angeordnet sind und der zweite Lufteinlass (1220, 122, 122A) und der zweite Luftauslass (1210, 121, 121A) jeweils auf gegenüberliegenden Seiten der zweiten Luftkanalplatte (180, 18) angeordnet sind; und
wobei ferner der erste Garraum (110, 11, 11A) und der zweite Garraum (120, 12, 12A) vertikal beabstandet angeordnet sind, der erste Lufteinlass (1120, 112, 112A) sich direkt über dem zweiten Luftauslass (1210, 121, 121A) befindet und der erste Luftauslass (1110, 111, 11A) sich direkt über dem zweiten Lufteinlass (1220, 122, 122A) befindet; oder
der erste Garraum (110, 11, 11A) und der zweite Garraum (120, 12, 12A) in Abständen auf beiden Seiten angeordnet sind, der erste Lufteinlass (1120, 112, 112A) befindet direkt links vom zweiten Luftauslass (1210, 121, 121A) befindet und der erste Luftauslass (1110, 111, 111A) sich direkt links vom zweiten Lufteinlass (1220, 122, 122A) befindet.

5. Die hocheffiziente Heißluftfritteuse nach Anspruch 1, wobei der erste Garraum (110, 11, 11A) und/oder der zweite Garraum (120, 12, 12A) mit einer Belüftungsöffnung (500) versehen ist, die mit der Außenluft in Verbindung steht; und
wobei ferner das Gehäuse (100, 10, 10A) eine Schale (190) umfasst, der erste Garraum (11'0, 11, 11A) und der zweite Garraum (120, 12, 12A) innerhalb des Gehäuses (190) angeordnet sind, eine Wärmeabfuhrkammer (600) zwischen den Außenwänden des ersten Garraums (110, 11, 11A) und des zweiten Garraums (120, 12, 12A) und der Schale (190) ausgebildet ist, die Schale (190) mit einem Luftauslasselement (700) versehen ist, das die Wärmeabfuhrkammer (600) mit der Atmosphäre verbindet, wobei das Luftauslasselement (700) einen Wärmeabfuhrlüfter (800) umfasst.

6. Die hocheffiziente Heißluftfritteuse nach einem der Ansprüche 1 bis 5, wobei der Innendurchmesser der ersten Rohrleitung (150, 15), die mit dem ersten Luftauslass (1110, 111, 111A) verbunden ist, größer ist als der Innendurchmesser der Rohrleitung, die mit dem zweiten Garraum (120, 12, 12A) verbunden ist; und/oder
der Innendurchmesser der zweiten Rohrleitung (160, 16), die mit dem zweiten Luftauslass (1210, 121, 121A) verbunden ist, größer ist als der Innendurchmesser der Rohrleitung, die mit dem ersten Garraum (110, 11, 11A) verbunden ist.

7. Die hocheffiziente Heißluftfritteuse nach Anspruch 6, wobei der Innendurchmesser der ersten Rohrleitung (150, 15) vom Ende, das mit dem ersten Luftauslass (1110, 111, 111A) verbunden ist, bis zum Ende, das mit dem zweiten Garraum (120, 12, 12A) verbunden ist, allmählich zunimmt; und/oder
der Innendurchmesser der zweiten Rohrleitung (160, 16) von dem Ende, das mit dem zweiten Luftauslass (1210, 121, 121A) verbunden ist, bis zu dem Ende, das mit dem ersten Garraum (110, 11, 11A) verbunden ist, allmählich zunimmt.

8. Die hocheffiziente Heißluftfritteuse nach Anspruch 6, wobei der Bereich der ersten Rohrleitung (150, 15), der dem ersten Umluftventilator (1310, 131, 131A) und dem ersten Luftauslass (1110, 111, 111A) entspricht, ein bogenförmiges Strömungsführungsteil ist, das dem zweiten Garraum (120, 12, 12A) zugewandt ist; und/oder
der Bereich der zweiten Rohrleitung (160, 16), der dem zweiten Umluftventilator (1410, 141, 141A) und dem zweiten Luftauslass (1210, 121, 121A) entspricht, ein bogenförmiges Strömungsführungsteil ist, der dem ersten Garraum (110, 11, 11A) zugewandt ist.

9. Die hocheffiziente Heißluftfritteuse nach Anspruch 6, wobei der erste Garraum (110, 11, 11A) mit einem ersten Lufteinlass (1120, 112, 112A) versehen ist, der der zweiten Rohrleitung (160, 16) entspricht, die Mündungskante des ersten Lufteinlasses (1120, 112, 112A) mit einem ersten ringförmigen Flansch (113) versehen ist und die zweite Rohrleitung (160, 16) über den ersten ringförmigen Flansch (113) gestülpt ist; und/oder
der zweite Garraum (120, 12, 12A) mit einem zweiten Lufteinlass (1220, 122, 122A) versehen ist, der der ersten Rohrleitung (150, 15) entspricht, die Mündungskante des zweiten Lufteinlasses (1220, 122, 122A) mit einem zweiten ringförmigen Flansch (123) versehen ist und die erste Rohrleitung (150, 15) über den zweiten ringförmigen Flansch (123) gestülpt ist.

10. Die hocheffiziente Heißluftfritteuse nach einem der Ansprüche 6 bis 9, wobei der Boden des ersten Garraums (110, 11, 11A) mit einem ersten vertieften (1710, 171, 171A) versehen ist, der erste Umluftventilator (1310, 131, 131A) sich innerhalb des ersten vertieften Hohlraums (1710, 171, 171A) befindet, die Bodenwand des ersten Garraums (110, 11, 11A) mit einer dem ersten Umluftventilator (1310, 131, 131A) entsprechenden und mit dem ersten vertieften Hohlraum (1710, 171, 171A) verbundenen Luftrückführungsöffnung (114, 114A) versehen ist und die Außenseite der Luftrückführungsöffnung (114, 114A) mit einem Luftauslass (115, 115A) ausgestattet ist; der erste Garraum (110, 11, 11A) mit einem ersten Frittierkorb (20, 20A) mit offener Oberseite ausgestattet ist, der erste Frittierkorb (20, 20A) so geformt ist, dass er mit der Innenwand des ersten Garraums (110, 11, 11A) einen Heißluftspalt (19) bildet, der Boden des ersten Frittierkorbs (20, 20A) mit einem Heißluftauslass (21, 21A) versehen ist, der mindestens einem Teils der Luftrückführungsöffnung (114, 114A) entspricht, der vom ersten Umluftventilator (1310, 131, 131A) erzeugte zirkulierende Luftstrom geeignet ist, durch den Luftauslass (115, 115A) in den Heißluftspalt (19) einzuströmen, dann in Richtung der offenen Oberseite des ersten Frittierkorbs (20, 20A) zu strömen, von der offenen Oberseite in den ersten Frittierkorb (20, 20A) einzuströmen und durch den Heißluftauslass (21, 21A) und die Luftrückführungsöffnung (114, 114A) in den ersten vertieften Hohlraum (1710, 171, 171A) zurückzukehren, und der Luftstromkreislauf des ersten Umluftventilators (1310, 131, 131A) mit einem ersten Heizelement (132, 132A) ausgestattet ist.

11. Die hocheffiziente Heißluftfritteuse nach Anspruch 10, bei der der Umfang des Heißluftauslasses (21, 21A) mit einem nach oben gefalteten Flansch (22, 22A) versehen ist, und bei der eine erste Frittierplatte (30) mit einer Durchgangsbohrung im Inneren des ersten Frittierkorbs (20, 20A) angeordnet ist, der mittlere Teil der ersten Frittierplatte (30) mit einem Schutzteil (31) versehen ist, das dem Heißluftauslass (21, 21A) entspricht, und das Schutzteil (31) zum Abdecken des Heißluftauslasses (21, 21A) geeignet ist.

12. Die hocheffiziente Heißluftfritteuse nach Anspruch 10, wobei die Seitenwand des ersten Frittierkorbs (20, 20A) mit mehreren Lufteinlassöffnungen (23) versehen ist, die mit dem Heißluftspalt (19) und dem Innenraum des ersten Frittierkorbs (20, 20A) in Verbindung stehen, wobei die Lufteinlassöffnungen (23) vertikal verlaufende, streifenförmige Öffnungen sind, der vom ersten Umluftventilator (1310, 131, 131A) erzeugte zirkulierende Luftstrom in den Heißluftspalt (19) eintritt und zumindest teilweise durch die Lufteinlassöffnungen (23) in den ersten Frittierkorb (20, 20A) strömt.

13. Die hocheffiziente Heißluftfritteuse nach einem der Ansprüche 6 bis 9, wobei der Boden des ersten Garraums (110, 11, 11A) einen ersten vertieften Hohlraum (1710, 171, 171A) aufweist, der erste Umluftventilator (1310, 131, 131A) innerhalb des ersten vertieften Hohlraums angeordnet ist und die Bodenwand des ersten Garraums (110, 11,11A) einen Luftrückführungsöffnung (114, 114A) aufweist, der dem ersten Umluftventilator (1310, 131, 131A) entspricht und mit dem ersten vertieften Hohlraum (1710, 171, 171A) verbunden ist, die Außenseite der Luftrückführungsöffnung (114,114A) mit einem Luftauslass (115, 115A) ausgestattet ist; der erste Garraum (110, 11, 11A) ist mit einem ersten Frittierkorb (20, 20A) mit offener Oberseite ausgestattet ist, der erste Frittierkorb (20, 20A) aus einem Außentopf (24A) und einem darin aufgehängten Innentopf (25A) besteht, zwischen der Seitenwand des Innentopfs (25A) und der Seitenwand des Außentopfs (24A) sich ein erster Heißluftspalt (26A) befindet, der mit dem Innenraum des Innentopfs (25A) verbunden ist, ein zweiter Heißluftspalt (27A) sich zwischen der Bodenwand des Innentopfs (25A) und der Bodenwand des Außentopfs (24A) befindet, am Boden des Außentopfs (24A) sich ein Heißluftauslass (21, 21A) befindet, der mit dem zweiten Heißluftspalt (27A) verbunden ist und mindestens einem Teil der Luftrückführungsöffnungen (114, 114A) entspricht, der Auslass (21, 21A) mit einem Heißlufteinlass (28A) ausgestattet ist, der mit dem ersten Heißluftspalt (26A) in Verbindung steht und zumindest teilweise den Luftauslässen (115, 115A) entspricht, der Boden des Innentopfs (25A) mit Belüftungsöffnungen (500) versehen ist, der vom ersten Umluftventilator (1310, 131, 131A) erzeugte zirkulierende Luftstrom durch die Luftauslässe (115, 115A) und den Heißlufteinlass (28A) in den ersten Heißluftspalt (26A) einströmen und in Richtung der offenen Oberseite des Innentopfs (25A) strömen kann, dann durch die offene Oberseite in den Innentopf (25A) eintritt und durch die Belüftungsöffnungen (500), den Heißluftauslass (21, 21A) und die Luftrückführungsöffnungen (114, 114A) in den ersten vertieften Hohlraum (1710, 171, 171A) zurückkehrt, und der Luftstromzirkulationsweg des ersten Umwälzventilators (1310,131,131A) mit einem ersten Heizelement (132, 132A) ausgestattet ist.

14. Die hocheffiziente Heißluftfritteuse nach Anspruch 13, bei der der Umfang des Heißluftauslasses (21, 21A) mit einem nach oben gefalteten Flansch (22, 22A) versehen ist und an der Bodenwand des Innentopfes (25A) ein dem Heißluftauslass (21, 21A) entsprechendes und abgedichtetes Abschirmungsteil (252A) angebracht ist, wobei das Abschirmungsteil (252A) zum Abdecken des Heißluftauslasses (21, 21A) geeignet ist.

15. Die hocheffiziente Heißluftfritteuse nach Anspruch 13, bei der die Seitenwand des Innentopfs (25A) mit mehreren Lufteinlassöffnungen (253A) versehen ist, die mit dem ersten Heißluftspalt (26A) und dem Innenraum des Innentopfs (25A) in Verbindung stehen, wobei die Lufteinlassöffnungen (253A) vertikal verlaufende, streifenförmige Öffnungen sind, der vom ersten Umluftventilator (1310, 131, 131A) erzeugte zirkulierende Luftstrom in den ersten Heißluftspalt (26A) eintritt und zumindest teilweise durch die Lufteinlassöffnungen (253A) in den inneren Topf (25A) strömt.

## Revendications

1. Friteuse à air à haute efficacité énergétique, incluant un corps (100, 10, 10A), dans laquelle le corps (100, 10, 10A) est doté à l'intérieur d'une première chambre de cuisson (110, 11, 11A) et d'une seconde chambre de cuisson (120, 12, 12A),
**caractérisée en ce que** la première chambre de cuisson (110, 11, 11A) est dotée d'un premier ventilateur de circulation (1310, 131, 131A), et la première chambre de cuisson (110, 11, 11A) est dotée d'une première sortie d'air (1110, 111, 111A) correspondant au premier ventilateur de circulation (1310, 131, 131A), la première sortie d'air (1110, 111, 111A) est reliée à la seconde chambre de cuisson (120, 12, 12A) par une première conduite (150, 15), la seconde chambre de cuisson (120, 12, 12A) est dotée d'un second ventilateur de circulation (1410, 141, 141A) et la seconde chambre de cuisson (120, 12, 12A) est dotée d'une seconde sortie d'air (1210, 121, 121A) correspondant au second ventilateur de circulation (1410, 141, 141A), la seconde sortie d'air (1210, 121, 121A) est reliée à la première chambre de cuisson (110, 11, 11A) via une seconde conduite (160, 16).

2. Friteuse à air haute efficacité énergétique selon la revendication 1, dans laquelle la première chambre de cuisson (110, 11, 11A) est dotée d'un premier tube de chauffage (1321), la seconde chambre de cuisson (120, 12, 12A) d'un second tube de chauffage (1421), et la puissance nominale du premier tube de chauffage (1321) est supérieure ou inférieure à la puissance nominale du second tube de chauffage (1421).

3. Friteuse à air haute efficacité énergétique selon la revendication 1, dans laquelle le corps (100, 10, 10A) est doté d'un moteur (400), et le moteur (400) est relié par entraînement au premier ventilateur de circulation (1310, 131, 131A) et au second ventilateur de circulation (1410, 141, 141A) ; et
de plus, le moteur (400) est situé entre la première chambre de cuisson (110, 11, 11A) et la seconde chambre de cuisson (120, 12, 12A), le moteur (400) possède un arbre rotatif de chaque côté par rapport à la première chambre de cuisson (110, 11, 11A) et la seconde chambre de cuisson (120, 12, 12A), les arbres rotatifs s'étendent respectivement dans la première chambre de cuisson (110, 11, 11A) et la seconde chambre de cuisson (120, 12, 12A) pour se connecter au premier ventilateur de circulation (1310, 131, 131A) et au second ventilateur de circulation (1410, 141, 141A).

4. Friteuse à air haute efficacité énergétique selon la revendication 1, dans laquelle la première chambre de cuisson (110, 11, 11A) comprend une première plaque de conduit d'air (170, 17, 17A) formant une partie de la paroi intérieure de la première chambre de cuisson, le milieu de la première plaque de conduit d'air (170, 17, 17A) est une première cavité encastrée (1710, 171, 171A) avec une ouverture orientée vers le centre de la première chambre de cuisson (110,11, 111A), le premier ventilateur de circulation (1310, 131, 131A) est situé dans la première cavité encastrée (1710, 171, 171A), et la première sortie d'air (1110, 111, 111A) est située sur la paroi latérale correspondant au premier ventilateur de circulation (1310, 131, 131A) de la première cavité encastrée (1710, 171, 171A) ; la seconde chambre de cuisson (120, 12, 12A) comprend une seconde plaque de conduit d'air (180, 18) formant une partie de la paroi intérieure de la seconde chambre de cuisson. Le milieu de la seconde plaque de conduit d'air (180, 18) est une seconde cavité concave (1810, 181) avec une ouverture orientée vers le centre de la seconde chambre de cuisson (120, 12, 12A), le second ventilateur de circulation (1410, 141, 141A) est situé dans la seconde cavité concave (1810, 181), et la seconde sortie d'air (1210, 121, 121A) est située sur la paroi latérale correspondant au second ventilateur de circulation (1410, 141, 141A) de la seconde cavité concave (1810, 181) ; et
de plus, le bord de la bouche de la première cavité encastrée (1710, 171, 171A) est courbé vers l'extérieur pour former une première partie d'extension (1720, 172, 172A), et la première partie d'extension (1720, 172, 172A) est dotée d'une première entrée d'air (1120, 112, 112A) qui communique avec la première chambre de cuisson (110, 11, 11A), la première entrée d'air (1120, 112, 112A) est reliée à la seconde sortie d'air (1210, 121, 121A) via la seconde conduite (160, 16) ; le bord de la bouche de la seconde cavité concave (1810, 181) est courbé vers l'extérieur pour former une seconde partie d'extension (1820, 182, 182A), et la seconde partie d'extension (1820, 182, 182A) est dotée d'une seconde entrée d'air (1220, 122, 122A) qui communique avec la seconde chambre de cuisson (120, 12, 12A), la seconde entrée d'air (1220, 122, 122A) est reliée à la première sortie d'air (1110, 111, 111A) par la première conduite (150, 15) ; et
de plus, la première entrée d'air (1120, 112, 112A) et la première sortie d'air (1110, 111, IHA) se trouvent respectivement de part et d'autre de la première plaque du conduit d'air (170, 17, 17A), et la seconde entrée d'air (1220, 122, 122A) ainsi que la seconde sortie d'air (1210, 121, 121A) se trouvent respectivement de part et d'autre de la seconde plaque du conduit d'air (180, 18) ; et
de plus, la première chambre de cuisson (110, 11, 11A) et la seconde chambre de cuisson (120, 12, 12A) sont disposées verticalement les unes des autres, la première entrée d'air (1120, 112, 112A) est située directement au-dessus de la seconde sortie d'air (1210, 121, 121A), et la première sortie d'air (1110, 111, 111A) est située directement au-dessus de la seconde entrée d'air (1220, 122, 122A) ; ou
la première chambre de cuisson (110, 11, 11A) et la seconde chambre de cuisson (120, 12, 12A) sont disposées à intervalles de chaque côté, la première entrée d'air (1120, 112, 112A) est située directement à gauche de la seconde sortie d'air (1210, 121, 121A), et la première sortie d'air (1110, 111, 111A) est située directement à gauche de la seconde entrée d'air (1220, 122, 122A).

5. Friteuse à air haute efficacité énergétique selon la revendication 1, dans laquelle la première chambre de cuisson (110, 11, 11A) et/ou la seconde chambre de cuisson (120, 12, 12A) est dotée d'un trou de ventilation (500) communiquant avec l'atmosphère extérieure ; et
de plus, le corps (100, 10, 10A) comprend une coque (190), la première chambre de cuisson (11'0, 11, 11A) et la seconde chambre de cuisson (120, 12, 12A) sont situées à l'intérieur de la coque (190), une chambre de dissipation thermique (600) est formée entre les parois extérieures de la première chambre de cuisson (110, 11, 11A) et la seconde chambre de cuisson (120, 12, 12A) et la coque (190), la coque (190) est dotée d'un composant de sortie d'air (700) faisant communiquer la chambre de dissipation de chaleur (600) avec l'atmosphère, le composant de sortie d'air (700) inclut un ventilateur de dissipation de chaleur (800).

6. Friteuse à air haute efficacité énergétique selon chacune des revendications 1 à 5, dans laquelle la taille interne de la première conduite (150, 15) reliée à la première sortie d'air (1110, 111, 111A) est plus grande que la taille interne reliée à la seconde chambre de cuisson (120, 12, 12A) ; et/ou
la taille interne de la seconde conduite (160, 16) reliée à la seconde sortie d'air (1210, 121, 121A) est supérieure à la taille interne reliée à la première chambre de cuisson (110, 11, 111A).

7. Friteuse à air haute efficacité énergétique selon la revendication 6, dans laquelle la taille interne de la première conduite (150, 15) augmente progressivement de l'extrémité reliée à la première sortie d'air (1110, 111, 111A) jusqu'à l'extrémité reliée à la seconde chambre de cuisson (120, 12, 12A) ; et/ou
la taille interne de la seconde conduite (160, 16) augmente progressivement, de l'extrémité reliée à la seconde sortie d'air (1210, 121, 121A) jusqu'à l'extrémité reliée à la première chambre de cuisson (110, 11, 11A).

8. Friteuse à air haute efficacité énergétique selon la revendication 6, dans laquelle la surface de la première conduite (150, 15) correspondant au premier ventilateur de circulation (1310, 131, 131A) et à la première sortie d'air (1110, 111, 111A) est une partie de flux de guidage incurvée orientée vers la seconde chambre de cuisson (120, 12, 12A) ; et/ou
la surface de la seconde conduite (160, 16) correspondant au second ventilateur de circulation (1410, 141, 141A) et à la seconde sortie d'air (1210, 121, 121A) est une partie de flux de guidage incurvée orientée vers la première chambre de cuisson (110, 11, 11A).

9. Friteuse à air haute efficacité énergétique selon la revendication 6, dans laquelle la première chambre de cuisson (110, 11, 11A) est dotée d'une première entrée d'air (1120, 112, 112A) correspondant à la seconde conduite (160, 16), le bord de la bouche de la première entrée d'air (1120, 112, 112A) est doté d'une première bride annulaire (113), et la seconde conduite (160, 16) est recouvert de manchons sur la première bride annulaire (113) ; et/ou
la seconde chambre de cuisson (120, 12, 12A) est dotée d'une seconde entrée d'air (1220, 122, 122A) correspondant à la première conduite (150, 15), le bord de la bouche de la seconde entrée d'air (1220, 122, 122A) est doté d'une seconde bride annulaire (123), la première conduite (150, 15) est manchonnée sur la seconde bride annulaire (123).

10. Friteuse à air haute efficacité énergétique selon l'une des revendications 6 à 9, dans laquelle le fond de la première chambre de cuisson (110, 11, 111A) est doté d'une première cavité encastrée (1710, 171, 171A) concave vers le bas, le premier ventilateur de circulation (1310, 131, 131A) est situé à l'intérieur de la première cavité encastrée (1710, 171, 171A), la paroi inférieure de la première chambre de cuisson (110, 11, 11A) est doté d'un orifice de retour d'air (114 114 A) correspondant au premier ventilateur de circulation (1310 131 131A) et relié à la première cavité encastrée (1710, 171, 171A), le côté extérieur de l'orifice de retour d'air (114 114 A) est doté d'une sortie d'air (115 115 A), la première chambre de cuisson (110, 11, 11A) est dotée d'un premier panier de friture (20, 20A) avec un dessus ouvert, le premier panier de friture (20,20A) est adapté pour former un espace d'air chaud (19) avec la paroi intérieure de la première chambre de cuisson (110, 11, 11A), le fond du premier panier de friture (20, 20A) est doté d'une sortie d'air chaud (21, 21A) correspondant au moins à une partie de l'orifice de retour d'air (114, 114A), le flux d'air circulant généré par le premier ventilateur de circulation (1310, 131, 131A) est adapté pour entrer dans l'espace d'air chaud (19) par la sortie d'air (115, 115 A), puis s'écouler dans la direction du dessus ouvert du premier panier de friture (20, 20A), entrer dans le premier panier de friture (20, 20A) depuis le dessus ouvert, et revenir à la première cavité encastrée (1710, 171, 171A) par la sortie d'air chaud (21, 21A) et l'orifice de retour d'air (114, 114A), le chemin de circulation de l'air du premier ventilateur de circulation (1310, 131, 131A) est doté d'un premier composant de chauffage (132 132A).

11. Friteuse à air haute efficacité énergétique selon la revendication 10, dans laquelle la périphérie de la sortie d'air chaud (21, 21A) est dotée d'une bride pliée vers le haut (22, 22A), une première plaque de friture (30) avec un trou traversant suspendu à l'intérieur du premier panier de friture (20, 20A) est prévue, la partie centrale de la première plaque de friture (30) est dotée d'une partie de protection (31) correspondant à la sortie d'air chaud (21, 21A), la partie de protection (31) est adaptée à la prise d'air chaud (21, 21A).

12. Friteuse à air haute efficacité énergétique selon la revendication 10, dans laquelle la paroi latérale du premier panier de friture (20, 20A) est dotée de plusieurs trous d'entrée d'air (23) qui communiquent avec l'espace d'air chaud (19) et la cavité intérieure du premier panier de friture (20, 20A), les trous d'entrée d'air (23) sont des trous en forme de bande à extension verticale, le flux d'air circulant généré par le premier ventilateur de circulation (1310, 131, 131A) entre dans l'espace d'air chaud (19) et passe au moins partiellement par les trous d'entrée d'air (23) jusqu'au premier panier de friture (20, 20A).

13. Friteuse à air haute efficacité énergétique selon l'une des revendications 6 à 9, dans laquelle le fond de la première chambre de cuisson (110, 11, 11A) est doté d'une première cavité encastrée (1710, 171, 171A) concave vers le bas, le premier ventilateur de circulation (1310, 131, 131A) est situé à l'intérieur de la première cavité encastrée (1710, 171, 171A), la paroi inférieure de la première chambre de cuisson (110, 11, 111A) est dotée d'un orifice de retour d'air (114, 114A) correspondant au premier ventilateur de circulation (1310, 131, 131A) et reliée à la première cavité encastrée (1710, 171, 171A), le côté extérieur de l'orifice de retour d'air (114 114 A) est doté d'une sortie d'air (115, 115A), la première chambre de cuisson (110, 11, 11A) est dotée d'un premier panier de friture (20, 20A) avec un dessus ouvert, le premier panier de friture (20, 20A) comprend un bac extérieur (24A) et un bac intérieur (25A) suspendus à l'intérieur du bac extérieur (24A), un premier espace d'air chaud (26A) communiquant avec la cavité intérieure du bac intérieur (25A) est formé entre la paroi latérale du bac intérieur (25A) et la paroi latérale du bac extérieur (24A), un second espace d'air chaud (27A) est formé entre la paroi inférieure du bac intérieur (25A) et la paroi inférieure du bac extérieur (24A), au fond du bac extérieur (24A), doté d'une sortie d'air chaud (21, 21A) qui communique avec le second espace d'air chaud (27A) et correspond à au moins une partie des orifices de retour d'air (114, 114A), à l'extérieur de la sortie d'air chaud (21, 21A), doté d'une entrée d'air chaud (28A) qui communique avec la première ouverture d'air chaud (26A) et correspond au moins partiellement aux sorties d'air (115, 115A), le fond du bac intérieur (25A) est doté de trous de ventilation (500), le flux d'air circulant généré par le premier ventilateur de circulation (1310, 131, 131A) est adapté pour entrer dans la première ouverture d'air chaud (26A) par les sorties d'air (115, 115 A) et l'entrée d'air chaud (28 A) et s'écouler dans la direction du dessus ouvert du bac intérieur (25 A), puis pénétrer dans le bac intérieur (25 A) depuis le dessus ouvert, et revenir à la première cavité encastrée (1710, 171, 171A) par les trous de ventilation (500), la sortie d'air chaud (21, 21A) et les orifices de retour d'air (114, 114A), le chemin de circulation de l'air du premier ventilateur de circulation (1310, 131, 131A) est doté d'un premier composant de chauffage (132, 132A).

14. Friteuse à air haute efficacité énergétique selon la revendication 13, dans laquelle la périphérie de la sortie d'air chaud (21, 21A) est dotée d'une bride pliée vers le haut (22, 22A), sur la paroi inférieure du bac intérieur (25A) dotée d'une partie de protection (252A) correspondant à la sortie d'air chaud (21, 21A) et possède une structure étanche, la partie de protection (252A) est adaptée à la couverture de la sortie d'air chaud (21, 21A).

15. Friteuse à air haute efficacité énergétique selon la revendication 13, dans laquelle la paroi latérale du bac intérieur (25A) est dotée de plusieurs trous d'entrée d'air (253 A) qui communiquent avec le premier espace d'air chaud (26A) et la cavité intérieure du bac intérieur (25A), les trous d'entrée d'air (253A) sont des trous en forme de bande s'étendant verticalement, le flux d'air circulant généré par le premier ventilateur de circulation (1310, 131, 131A) entre dans le premier espace d'air chaud (26A) et passe au moins partiellement par les trous d'entrée d'air (253A) jusqu'au bac intérieur (25A).
